Europäisches Patentamt

European Patent Office

Office européen des brevets

(19)

(11) Publication number: **0 390 271**

**A1**

(12) **EUROPEAN PATENT APPLICATION**

(21) Application number: **90200694.9**

(22) Date of filing: **26.03.90**

(51) Int. Cl.5: **H04N 7/00, H04N 11/00**

(30) Priority: **28.03.89 NL 8900753**
**31.10.89 NL 8900268**

(43) Date of publication of application:
**03.10.90 Bulletin 90/40**

(84) Designated Contracting States:
**AT BE CH DE DK ES FR GB GR IT LI LU NL SE**

(71) Applicant: **N.V. Philips' Gloeilampenfabrieken**
**Groenewoudseweg 1**
**NL-5621 BA Eindhoven(NL)**

(72) Inventor: **Führen, Marcel**
**c/o Octrooibureau B.V., Prof. Holstlaan 6**
**NL-5656 AA Eindhoven(NL)**
Inventor: **Annegarn, Marcellinus Joseph**
**Johannes Cornelius**
**c/o Octrooibureau B.V., Prof. Holstlaan 6**
**NL-5656 AA Eindhoven(NL)**
Inventor: **Van De Polder, Leendert Johan**
**c/o Octrooibureau B.V., Prof. Holstlaan 6**
**NL-5656 AA Eindhoven(NL)**
Inventor: **Raven, Johannes Gerardus**
**c/o Octrooibureau B.V., Prof. Holstlaan 6**
**NL-5656 AA Eindhoven(NL)**

(74) Representative: **Kooiman, Josephus Johannes**
**Antonius et al**
**INTERNATIONAAL OCTROOIBUREAU B.V.**
**Prof. Holstlaan 6**
**NL-5656 AA Eindhoven(NL)**

(54) **Extended composite television system.**

(57) Starting from the fact that a multitude of "subchannels" can be distinguished in a composite television signal, it is proposed to fill these subchannels with digital information including at least a partial video signal component, the significance of the digital information being initially left free.

EP 0 390 271 A1

FIG.1

## Extended composite television system.

The invention relates to an extended composite television system in which an extended television signal is encoded in compatibility with conventional television signals, said extended television signal comprising conventional television signal components and at least two extra signals.

Such a television system is known from DE-C 33 05 498 in which left and right side panels of a wide-image television picture with an aspect ratio of, for example, 2 : 1 or 5 : 3 are transmitted in a manner invisible for a conventional receiver, or time-compressed in the horizontal overscan, or by adding these side panels in the field retrace.

It is one of the objects of the invention to provide an extended composite television system which is compatible with conventional composite television systems and in which, dependent on the broadcaster's wishes and suitable program material, other extra signals can also be encoded.

In accordance with a first aspect of the invention, there is provided a method of encoding an extended television signal in compatibility with conventional television signals, said extended television signal comprising conventional television signal components and at least two extra signals including at least a partial video signal component, said method comprising the steps of:

encoding said conventional television signal components;

digitizing said extra signals for obtaining digital signals;

distributing said digital signals over at least one subchannel for obtaining distributed signals; and

combining the distributed digital signals and the encoded conventional television signal components to form said extended television signal.

In accordance with a second aspect of the invention, there is provided a circuit for decoding an encoded extended television signal compatible with a conventional television signal comprising analog encoded conventional television signal components and at least two extra signals including at least a partial video signal component, said decoding circuit comprising:

means for receiving an extended video signal;

means coupled to said receiving means for separating said extended video signal into a low-frequency luminance signal and a high-frequency video signal;

means coupled to said separating means for obtaining a high-frequency luminance signal from said high-frequency video signal;

means coupled to said separating means for obtaining chrominance signals from said high-frequency video signal; and

means coupled to said separating means for obtaining said extra signals from said high-frequency video signal.

The invention is based on the recognition that, for example, the following sub-channels suitable for transmitting extra signals can be distinguished in a composite television signal:

quadrature modulation of the intermediate frequency (IF) vision carrier,

a modulate on an extra sub-carrier in the active video portion,

modulating the chrominance sub-carrier in a different phase relationship while using time-variant filtering,

utilising unused spectrum (1 MHz remains unused in each channel in the PAL/G television transmission system),

efficient use of non-visible parts of the television signals.

By digitally encoding the extra signals whose significance is initially left free, a distinction can be made according to the invention between the method by which each digital signal is transmitted on the one hand, paying attention to optimum utilisation of the sub-channels, and the significance of the extra signals on the other hand so that they can be optimally distributed over a number of different sub-channels each having only a limited transmission capacity. Since according to the invention a number of extra signals can be transmitted simultaneously without having to pay attention to the available channel capacity per sub-channel and the required channel capacity per extra signal, as long as the total required channel capacity does not exceed the total available channel capacity, a great flexibility is obtained.

The extra signals may be, for example side panels, high-quality stereo sound, chrominance signals, high-frequency luminance signals and/or signal for data services such as teletext. By once more taking up the chrominance signals in the extra signals, the known cross-color error can be obviated in a receiver according to the invention. By simultaneously transmitting the side panels in addition to the conventional television signal components, once more the chrominance signals and high-quality stereo sound, a wide-image television picture and sound approximating a wide-image television picture and sound obtained by means of a MAC television signal to a high degree are obtained upon display. If desired, it may be sufficient to use the side panels and the chrominance signals. If a satisfactory separation between luminance and chrominance can be achieved in another manner, channel capacity which has remained unused because the chrominance signals have not been transmitted once more may be used, for example, for transmitting high-frequency luminance signals so that display with a higher resolution can be achieved.

There will not be much wide-image picture material available in the near future. The flexibility provided by the invention enables the channel capacity not required for transmitting side panels to be utilised for other extra signals, when no side panels are transmitted.

By adding a decoding circuit for extended composite television signals according to the invention, to a display device for wide-image television signals encoded in accordance with a MAC television system, it will be possible to use the wide-image display of a MAC receiver more efficiently because wide-image television signals in accordance with the composite television system extended by means of side panels according to the invention make full use of the wide-image display.

These and other, more detailed aspects of the invention will now be described and elucidated by way of non-limitative examples and with reference to the accompanying drawings.

In the drawings:

Fig. 1 shows an extended composite television system according to the invention;

Fig. 2 shows important frequencies of a PAL signal in the vertical-temporal frequency domain;

Fig. 3a shows a succession of a decimating filter and an interpolating filter for use in an extended encoder or decoder according to the invention;

Fig. 3b shows a simplified embodiment of a decimating filter;

Fig. 3c shows a simple embodiment of an interpolating filter;

Fig. 4 shows an extended encoder according to a first aspect of the invention, which eliminates cross-color and cross-luminance;

Fig. 5 shows an extended decoder according to this aspect of the invention;

Fig. 6a shows a first embodiment of an extended encoder for use with the SECAM television system;

Fig. 6b shows the main features of a second embodiment of an extended encoder for use with the SECAM television system;

Fig. 7 shows an embodiment of an extended decoder for use with the SECAM television system;

Fig. 8 shows a possible amplitude characteristic $|H_{vsb}(f)|$ of a vestigial sideband filter;

Fig. 9 shows an arrangement of luminance, chrominance and extra information on 4 television lines;

Fig. 10 shows an embodiment of an extended decoder according to a third aspect of the invention, according to which additional information is compatibly transmitted by means of an extra modulation of the chrominance subcarrier and by means of time-variant filtering;

Figs. 11a and 11b show two embodiments of a first building block A in the embodiment of Fig. 10;

Figs. 12a and 12b show two corresponding embodiments of a second building block B in the embodiment of Fig. 10;

Fig. 13 shows an embodiment of an extended encoder according to the third aspect of the invention;

Figs. 14a and 14b show two embodiments of a building block C in the encoder of Fig. 13;

Fig. 15 shows a modified embodiment of a chrominance section of the extended encoder according to the third aspect of the invention;

Fig. 16 shows a measuring line to be included in the vertical blanking;

Fig. 17 schematically shows that part of an embodiment of a phase error compensating circuit employing the measuring line of Fig. 16, which is active during the occurrence of this measuring line;

Fig. 18 shows wave forms occurring in the circuit of Fig. 17;

Fig. 19 schematically shows that part of the embodiment of the circuit partially shown in Fig. 17, which is active during the picture information containing part of the video signal;

Figs. 20, 21, 22, 23, 24 and 25 show modifications of the embodiments of Figs. 10, 11a, 12a, 13, 14a and 15, respectively;

Fig. 26 shows an arrangement of pairs of two consecutive lines indicating the manner of sample rate increase and decrease for use with the embodiments of Figs. 20 through 25;

Fig. 27 shows time variant filtering operations to be performed in the extended encoder and the extended decoder according to the third, fourth and following aspects of the invention;

Figs. 28a and 28b show an extended encoder and an extended decoder according to the invention for use in a system employing a separate subcarrier to carry the additional information;

Figs. 29a and 29b show an extended encoder and an ectended decoder according to the invention for use in another system employing a separate subcarrier to carry the additional information;

Fig. 30 shows two configurations of blocks of three instants in the vertical-temporal frequency domain at which the Y/U/V/$D_I$/$D_Q$ information is made equal according to a third system according to the invention employing a separate subcarrier to carry the additional information;

Fig. 31 shows a PAL modifier;

Figs. 32 and 33 show an extended encoder and an extended decoder according to a first variant of this third system:

Fig. 34 shows a modification of Fig. 30 for use with a second variant of this third system;

Figs. 35 and 36 show an extended encoder and an extended decoder according to this second variant;

Fig. 37 shows a preferred combination of vestigial sideband modulation and quadrature modulation of the additional information for use with each of the methods of Figs. 28-30; and

Fig. 38 shows a block diagram of an embodiment for obtaining the characteristic of Fig. 31.

"Extended composite TV systems" are understood to mean existing composite TV systems (such as PAL, NTSC, SECAM) which are extended in a compatible manner so that additional operations are carried out in an extended encoder as well as in an extended decoder. These additional operations could be the addition and extraction, respectively, of additional information. This information can be added in different manners such as:

- quadrature modulation of the IF vision carrier
- a modulate on an extra subcarrier in the active video portion
- utilising unused spectrum (1 MHz in PAL/G)
- a more efficient use of blanking (for example during the horizontal and/or vertical overscan.

In literature proposals are known in which the additional information is largely limited to analog video information of which the type of information is fixed.

Starting from the fact that a multitude of "sub-channels" (for example those mentioned above) can be distinguished in a composite TV channel, it is proposeed to fill these channels with digital information whose significance is initially left free, such that starting from a given amount of data this information is optimally distributed over the different sub-channels.

This leads to a great flexibility because a distinction can be made between the method by which the data are transmitted and the significance of these data. In practice this means that, dependent on the broadcaster's wishes and the program material, these data may be given a different significance on the condition that the extended receiver receives a "code" indicating how the data must be interpreted.

An example of this flexibility can be found, for example in a situation in which a picture having a 16:9 aspect ratio is to be transmitted in a compatible manner by encoding the "side panels" and by transmitting them as additional digital information. However, in the near future there will not be much 16:9 picture material; moreover, there will always be an enormous supply of 4:3 picture material for which it must always be possible to transmit this material. In the transitional situation and during 4:3 broadcasts, the realised data capacity can be utilised for other purposes, for example for cross-color elimination, digital stereo sound or "TEXT" purposes.

A specific embodiment could be a modification of the ACTV system in which the current additional analog information is replaced by digital information which may have an arbitrary significance. Generally speaking, the addition of extra information could according to the present invention be realised by

- quadrature modulation of the intermediate frequency (IF) picture carrier, e.g. by modulating an N level digital baseband signal on the quadrature phase of the IF carrier, which does not comprise any DC due to a suitably chosen manner of encoding (for example AMI),
- (digitally) modulating an extra sub-carrier in the active video part, i.e. the part containing the picture information (for example 16-QAM in the case of a digital modulation),
- modulating the chrominance subcarrier in a different phase relationship while using time-variant filtering,
- utilising unused spectrum (1 MHz remains unused in each channel in the PAL/G television transmission system), or
- efficient use of non-visible parts of the television signal, e.g. transmitting a digital baseband signal in the horizontal overscan.

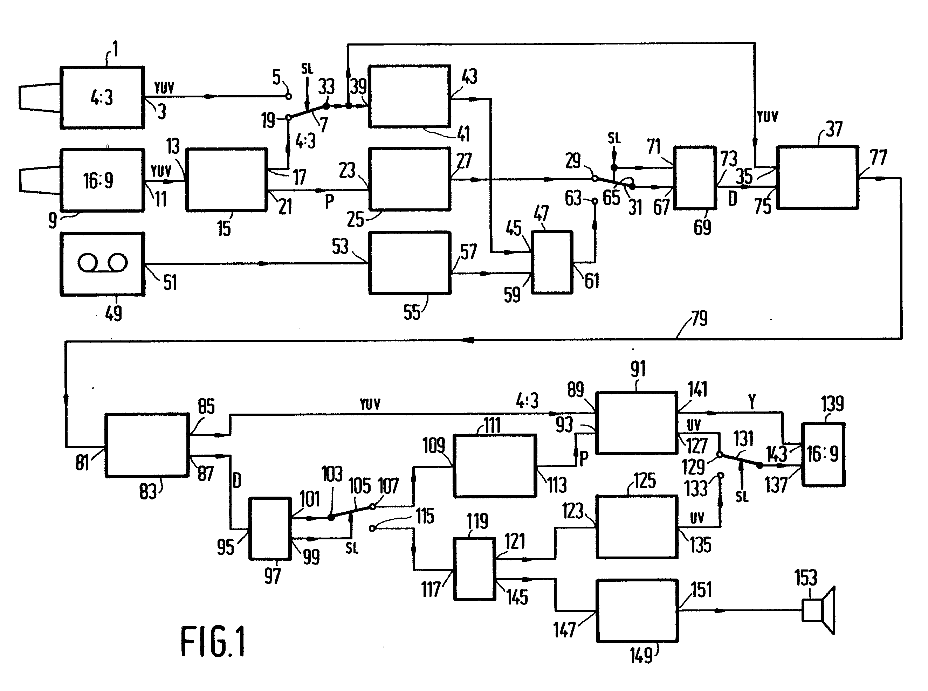

A more specific example of the significance of the additional digital information and the flexibility which can be realised is shown in Fig. 1 in which an extended encoder 37 and an extended decoder 83 may use techniques mentioned above. In Fig. 1 two options are possible for filling in the additonal data capacity, dependent on the broadcaster's wishes:

(1) the transmission of the side panels of a 16:9 picture

(2) the transmission of additional audio signals and of the total UV information (reduced in bit rate in a suitable form) so that the extended receiver can receive a picture which is free from cross-color.

Of course an infinite number of variations can be conceived, possibly with more than two options.

In the encoder section of the extended television system shown in Fig. 1, an output 3 of a camera 1 with an aspect ratio of 4 : 3 is connected to a first switching contact 5 of a change-over switch 7 which is controlled by a control signal SL. An output 11 of a wide-image camera 9 with an aspect ratio of 16 : 9 is connected to an input 13 of a splitter 15. For a favorable embodiment of such a splitter, reference is made to European Patent Application EPA 0,293,986 (PBA 21.380) whose contents are herein incorporated by reference. The splitter 15 supplies from a first output 17 a 4 : 3 central portion of a picked up 16 : 9 picture to a second switching contact 19 of the switch 7, and from a second output 21 side panels P to an input 23 of a digital panel encoder 25. An output 27 of the panel encoder 25 is connected to a first switching contact 29 of a change-over switch 31 which is also controlled by the control signal SL. A common terminal 33 of the switch 7 is connected to an input 35 for conventional television signal components of a channel encoder 37.

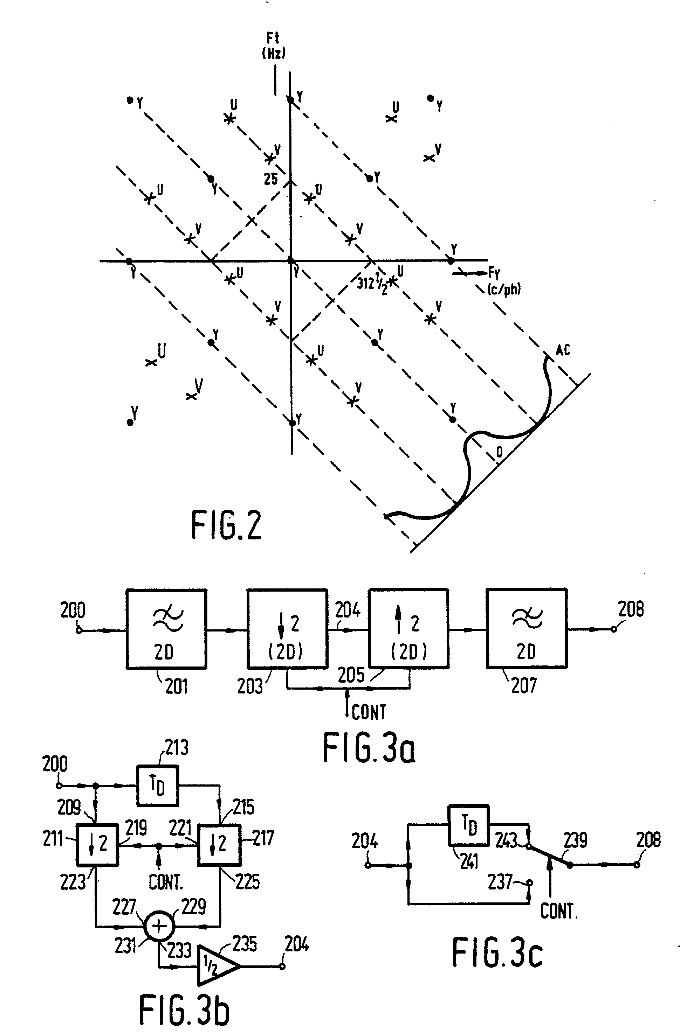

The channel encoder 37 is adapted to suitably distribute digitally encoded extra signals D over a number of the sub-channels indicated for this purpose, analogously encoding the conventional television signal components YUV, and combining the distributed digital signals and the analogously encoded conventional television signal components to the extended television signal according to the invention. The distribution of a digital data flow over a number of subchannels can be effected by means of a demultiplexer. In this description it will be described with reference to Fig. 2 and the following Figures for a number of possible sub-channels how digital extra signals D can be transmitted therein so that they are hardly visible or invisible for a conventional receiver.

The common terminal of the switch 7 is further connected to an input 39 of a digital chrominance encoder 41, an output 43 of which is connected to a first input 45 of a multiplexer 47. An output 51 of an audio recorder 49 is connected to an input 53 of a digital audio encoder 55, an output 57 of which is connected to a second input 59 of the multiplexer 47. An output 61 of the multiplexer 47 is connected to a second switching contact 63 of the switch 31, a common terminal 65 of which is connected to a first input 67 of a multiplexer 69, a second input 71 of which receives the control signal SL. An output 73 of the multiplexer 69 is connected to a second input 75 of the channel encoder 37, an output 77 of which is connected to an input 81 of a channel decoder 83 via a transmission or storage channel 79.

In the channel decoder 83 the conventional television signal components YUV are obtained from the extended television signal and supplied to a first output 85. Furthermore, the digitally encoded extra signals D are obtained from the number of sub-channels over which these extra signals are distributed, subsequently combined by means of a multiplexer and applied to a second output 87 of the channel decoder 83. It will be described with reference to Fig. 2 and the following Figures which techniques can be used to regain the digital extra signals D from a number of sub-channels.

The output 85 of the channel decoder 83 supplies the conventional television signal components to a first input 89 of a stitching circuit 91 which stitches the conventional central portion of a wide-image television picture to the side panels which are applied to a second input 93 of the stitching circuit 91. For a favorable embodiment of such a stitching circuit, reference is made to said European Patent Application EP-A 0,293,986 (PHA 21.380).

The output 87 of the channel decoder 83 is connected to an input 95 of a demultiplexer 97 for obtaining from the extra signals, the control signal SL at a first output 99 on the one hand and the side panels or the extra chrominance and audio signals at a second output 101 on the other hand. The output 101 of the demultiplexer 97 is connected to a common terminal 103 of a change-over switch 105 controlled by the control signal SL. A first switching contact 107 of the switch 105 is connected to an input 109 of a panel decoder 111, an output 113 of which is connected to the input 93 of the stitching circuit 91.

A second switching contact 115 of the switch 105 is connected to an input 117 of a demultiplexer 119. A first output 121 of the demultiplexer 119 applies digitally encoded chrominance signals to an input 123 of a digital chrominance decoder 125. An output 127 of the stitching circuit 91 is connected to a first switching contact 129 of a change-over switch 131 controlled by the control signal SL, while a second switching contact 133 is connected to an output 135 of the chrominance decoder 125. In the shown position of the switch 131 chrominance signals UV of the wide image television signal restored by the stitching circuit 91, are applied by the switch 131 to a chrominance signal input 137 of a 16 : 9 display unit 139; in the position not shown the additionally transmitted chrominance signals are applied to the display unit 139, obtaining a display without the known cross-color error. A luminance signal output 141 of the stitching circuit 91 applies luminance signals Y to a luminance signal input 143 of the display unit 139. When a wide-image extended television signal is received, the stitching circuit 91 supplies the restored wide-image television signal. However, if no side panels are received, the stitching circuit 91 only supplies the conventional central portion, with, for example grey side bars being added to enable display on the 16 : 9 display unit 139.

A second output 145 of the demultiplexer 119 applies digitally encoded audio signals to an input 147 of a digital audio decoder 149, an output 151 of which is connected to a loudspeaker 153.

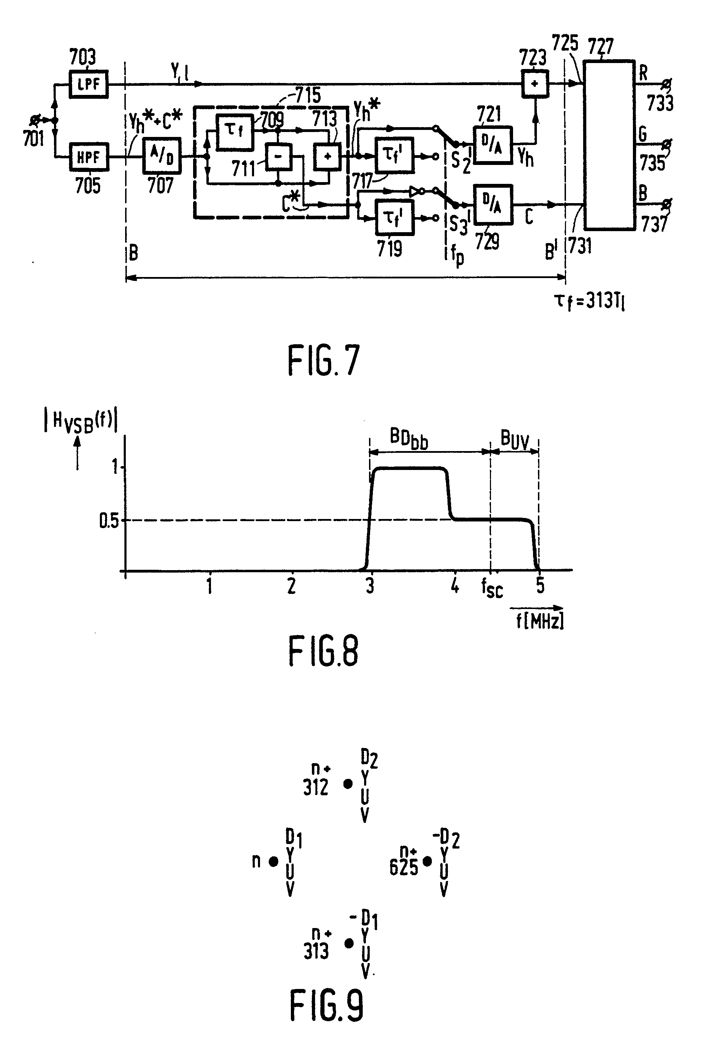

In the further course of this application a technique of time-variant filtering also used for other aspects of the invention will be firstly elaborated with reference to an example, elucidated by means of Figs. 2 to 7, of a novel manner of obtaining very good luminance/chrominance separation in, for example, a PAL or a SECAM decoder. Subsequently two possible sub-channels for the extended composite television system according to the invention will be described with reference to Figs. 8 to 26 and 27 to 38.

The problem of cross-color (XC) and cross-luminance (XL) reduction in PAL has been known for a long time and is described in many publications, which are largely based on 1, 2 or 3-dimensional linar time-invariant filters in an encoder and/or a decoder. A fundamental restriction is that a perfect separation of luminance signals Y and chrominance signals U/V can only be obtained if they are separated from one another by means of ideal (i.e. "rectangular") filters in the 3D spectrum. A solution which is often used is a separate horizontal filter which separates the low horizontal and high horizontal Y frequencies whereafter the high horizontal Y frequencies and the U/V frequencies in the vertical-temporal domain are filtered so that a minimum amount of overlap will occur between Y and U/V. This vertical-temporal filtering can be performed on the basis of 2TL, 312TL or 1250TL delay elements, in which TL indicates the line period. It will be evident that for considerations of implementation and costs the number of delay elements will be limited. This has the drawback that the filters will have no well-defined pass and stop bands so that a residue of XC and XL will always subsist. 3-Tap (1-2-1) transversal filters are often used which are a favorable compromise between compexity and residue of XC and XL. If these filters are used in the encoder as well as the decoder, in the frequency domain a $[COS(x)]^4$ amplitude characteristical will overall be produced in the $Ft = 0$, $Ft = Fy$ or $Fy = 0$ direction, respectively, so that the vertical-temporal bandwidth is relatively small, which is indicated in Fig. 2 for a realisation using 312TL delay elements. In the case of 312TL (and certainly in the case of 1250TL) delay elements, a temporal loss of resolution (blur) is expected to occur, which should especially be visible at the edges of moving colored faces.

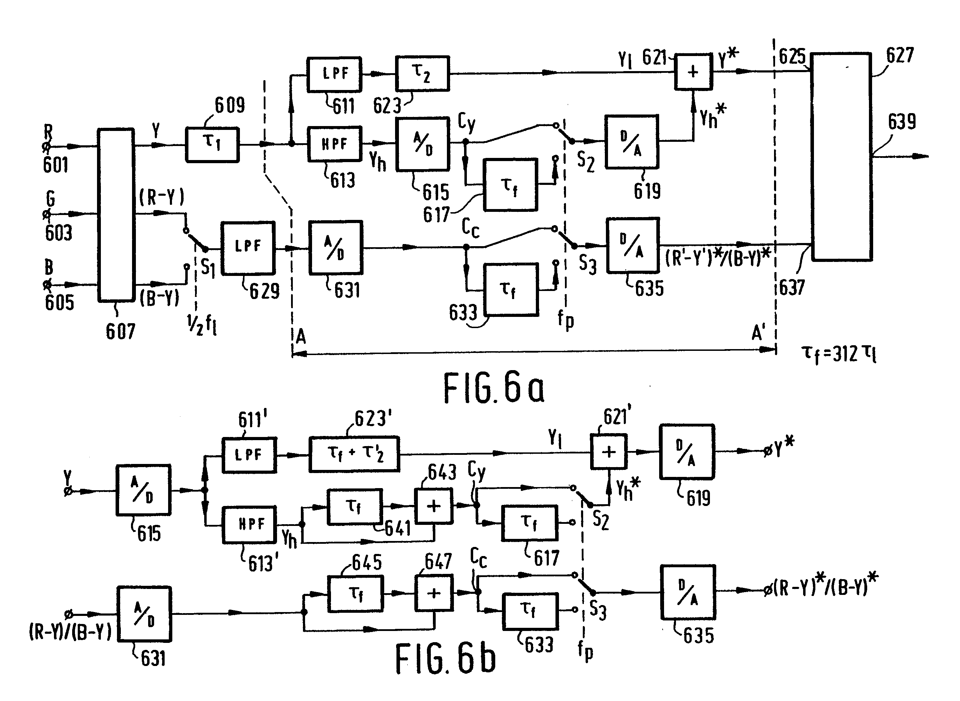

The filtering techniques according to the present invention provide a perfect separation of Y and U/V by means of linear time-variant filtering in contrast to the above mentioned time-invariant filtering. The method which is proposed differs fundamentally from the "intraframe averaging" technique of the ACTV system in NTSC due to the fundamental difference in the relationship between the chrominance subcarrier frequency and line frequency in NTSC and PAL. This invention can also be applied to the SECAM system, which will also be elucidated with reference to Figs. 6 and 7.

The principle of the time-variant filtering technique according to the present invention is based on the fact that, starting from a given sampling point, both the "U" subcarrier and the "V" subcarrier are shifted (substantially) 180° in phase at the sampling point after 2TL, 312TL or 1250TL. The "U" subcarrier is understood to mean the standard PAL subcarrier, while the "V" subcarrier is understood to mean the standard PAL subcarrier multiplied by a line-alternating +/- 1. It is to be noted that while in theory, the present method could be used with a delay period Td which is equal to 2, 312 or 1250 times Tl, Applicants have found that the picture quality is very much better when Td is equel to 312 Tl rather than when Td is equal to 2 Tl or 1250 Tl.

If the U/V information were pairwise equal at two sampling points and the Y information (i.e. the high horizontal frequencies) were also equal, the high-frequency Y information can be separated again from the modulated in U/V information in an extended decoder according to the invention, after a standard PAL encoding operation has been carried out, by subtracting the information of the pairs at the above-mentioned sampling points and by dividing them by 2 (this yields the high-frequency Y components). Subsequently a vertical-temporal interpolation must be carried out both with respect to U/V and the high frequency Y.

The fact that the information should be identical at the two above-mentioned sampling points actually involves 4 actions which have to be performed in the extended encoder according to the invention:

1) A vertical-temporal lowpass filtering (block 201 in Fig. 3a), which may be a simple averaging. Actually, this filter is not essential but it does prevent unnecessary aliasing.

2) A vertical-temporal sampling rate decrease by a factor of 2. Together with action 1 this is a decimating filter and thus time-variant. In Fig. 3a, this is indicated by block 203.

3) A vertical-temporal sampling rate increase by a factor of 2, see block 205. This sampling rate increase occurs in phase with the sampling rate decrease of Action 2, which is indicated in the figure by applying the same control signal CONT to the blocks 203 and 205.

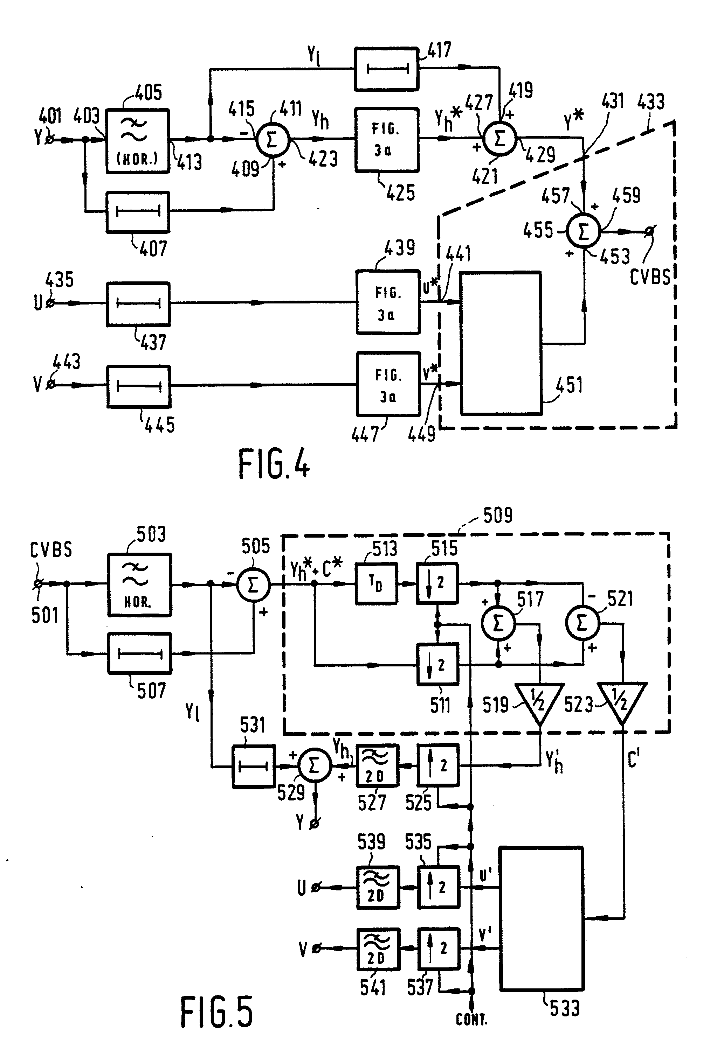

4) A vertical-temporal repetition which is actually the simplest lowpass filter. Together with action 3 this is an interpolating filter and thus time-variant. In Fig. 3a this is indicated by block 207. The total action is thus a succession of a decimating filter and an interpolating filter in which the input and output sampling structures are the same. The general model is shown in Fig. 3a; the decimating filter may, however be simplified as is shown in Fig. 3b while a simple interpolating filter can be constructed as is shown in Fig. 3c. These signal operations are to be performed at the high horizontal frequency components of Y and on the

EP 0 390 271 A1

total U/V signals. Fig. 4 shows the modifications with respect to the current situation at the encoder end.

Fig. 5 shows the modifications with respect to the current situation at the decoder end. Firstly, the high frequencies are to be separated from the low frequencies, whereafter the framed section 509 in Fig. 5 separates the high luminance frequencies Yh* from the chrominance modulate C* by means of a decimating filter (an averager). The decimated high-frequency luminance signal Yh' is subsequently added to the low-frequency luminance signal Yl via an interpolating filter. The color demodulation is only to be operative during 1 (active) field period per frame period, whereafter the demodulated (and decimated) U/V signals are interpolated to the original interlace sampling structure. In theory, these interpolating filters may be rendered as complex as is desirable, but repeaters will be generally used for this purpose (see Fig. 3b). Also the decimating filters in the encoder can be rendered as complex as is desirable.

A last important point is that the means for decreasing and increasing the sampling rate in the encoder and the decoder should be in phase. To this end the composite PAL signal provides amply sufficient possibilities for the purpose of synchronisation.

It will be evident that the techniques described (using an ideal horizontal bandsplitter filter) yield a perfect separation of Y and U/V by means of an extended decoder according to the invention, with the drawback of some vertical-temporal aliasing due to the non-ideal decimating filter, which drawback occurs both for the standard decoder and the extended decoder according to the invention. A further drawback of the techniques described is a residue of vertical-temporal repetition spectra caused by the sampling rate decrease, which residue for the standard decoder is determined by the non-ideal interpolating filter (the repeater) and which residue for the extended decoder is determined by the interpolating filter present in this decoder, which filter also may be a repeater. However, with the simplest decimating and interpolating filters a $[COS(x)]^{**}2$ amplitude characteristic is overall obtained in the frequency spectrum in the (respective) $Ft = O$, $Fy = Ft$ or $Fy = O$ directions so that a vertical-temporal bandwidth which is twice as large is obtained as compared with linear time-invariant (1-2-1) transversal filters.

Fig. 3b shows an embodiment of the decimating filter shown as two separate blocks 201 and 203 in Fig. 3a. An input 200 of the decimating filter is connected to an input 209 of a first sample rate decreasing circuit 211 and to an input 215 of a second sample rate decreasing circuit 217 via a delay 213. The control signal CONT is applied to control inputs 219 and 221 of the sample rate decreasing circuits 211 and 217, respectively. Outputs 223 and 225 of the sample rate decreasing circuits 211 and 217 are connected to inputs 227 and 229, respectively, of an adder 231, an output 233 of which is connected to a terminal 204 via a halving circuit 235.

Fig. 3c shows an embodiment of the interpolating filter shown as two separate blocks 205 and 207 in Fig. 3a. An input of the interpolating filter, constituted by the terminal 204, is connected to a first switching contact 237 of a change-over switch 239 and, via a delay 241, to a second switching contact 243 of the switch 239 which is further connected to an output 208 of the interpolating filter.

As shown, for example in the extended encoders according to Fig. 6a or 6b, the sample rate decreasing circuits 211 and 217 of Fig. 3b are not really required because samples to be removed by these circuits 211 and 217 are left unused by the switch 239 shown in Fig. 3c. The sample rate decreasing circuits 211 and 217 are shown to indicate that circuit elements subsequent to these circuits could be used for other purposes during the periods when no samples are supplied by the sample rate decreasing circuits, for example, during every second field period.

Fig. 4 shows a time-variant filtering encoder according to the invention for enabling a display at the decoder side, of for example a PAL signal without cross-luminance and cross-color errors. An input 401 for the luminance signal Y is connected to an input 403 of a horizontal low-pass filter 405. The input 401 is also connected via a delay 407 to a non-inverting input 409 of a subtractor 411. An output 413 of the horizontal low-pass filter 405 is connected to an inverting input 415 of the subtractor 411 and supplies a low-frequency luminance signal Yl to a first input 419 of an adder 421 via a delay 417. An output 423 of the subtractor 411 supplies a high-frequency luminance signal Yh to a decimating/interpolating filter 425 (see Fig. 3a) which supplies a time-variant filtered high-frequency luminance signal Yh* to a second input 427 of the adder 421. An output 429 of the adder 421 supplies a time-variant filtered luminance signal Y* to a luminance signal input 431 of a PAL encoder 433.

An input 435 for the chrominance signal U is connected to a decimating/interpolating filter 439 (see Fig. 3a) via a delay 437 for supplying a time-variant filtered chrominance signal U* to a U signal input 441 of the PAL encoder 433.

An input 443 for the chrominance signal V is connected to a decimating/interpolating filter 447 (see Fig. 3a) via a delay 445 for supplying a time-variant filtered chrominance signal V* to a V signal input 449 of the PAL encoder 433.

The chrominance signal inputs 441 and 449 of the PAL encoder 443 are connected to a PAL

7

chrominance modulator 451 for supplying a modulated chrominance signal C* to a first input 453 of an adder 455. A second input 457 of the adder 455 is connected to the luminance signal input 431 of the PAL encoder 433. An output 459 of the adder 455 supplies the time-variant filtered encoded video signal CVBS.

Fig. 5 shows a time-variant filtering decoder according to the invention for displaying, for example a PAL signal without cross-luminance and cross-color errors. The time-variant filtered encoded video signal CVBS is applied to an input 501 of the decoder which supplies a low-frequency luminance signal Yl by means of a horizontal low-pass filter 503 to an inverting input (-) of a subtractor 505. The input 501 is also connected via a compensating delay 507 to a non-inverting input (+) of the subtractor 505. The subtractor 505 supplies a filtered high-frequency video signal $Yh^* + C^*$ to a decimating separating filter 509 for obtaining a decimated high-frequency luminance signal $Yh'$ and a decimated chrominance signal $C'$.

In the decimating separating filter 509 the high-frequency video signal $Yh^* + C^*$ is applied to a first sample rate decreasing circuit 511, and to a second sample rate decreasing circuit 515 via a delay 513. Output signals of the two sample rate decreasing circuits 511 and 515 supply the decimated high-frequency luminance signal $Yh'$ via an adder 517 and a first halving circuit 519, and the decimated chrominance signal $C'$ via a subtractor 521 and a second halving circuit 523. The high-frequency decimated luminance signal $Yh'$ is applied to an interpolating filter comprising a sample rate increasing circuit 525 and a two-dimensional low-pass filter 527 for obtaining a high-frequency luminance signal Yh. An adder 529 combines the high-frequency luminance signal Yh and the low-frequency luminance signal Yl, which is delayed by a compensating delay 531, to a time-variant filtered decoded luminance signal Y.

The decimated chrominance signal $C'$ is applied to a conventional, or standard PAL demodulator 533 for obtaining decimated chrominance signals $U'$ and $V'$. The decimated chrominance signals $U'$ and $V'$ are applied to interpolating filters comprising sample rate increasing circuits 535 and 537 and two-dimensional low-pass filters 539 and 541, respectively, for obtaining time-variant filtered decoded chrominance signals U and V, respectively. All sample rate decreasing circuits 511 and 515 and the sample rate increasing circuits 525, 535 and 537 are controlled by the same control signal CONT.

To sum up the above-described technique, an essentially perfect separation of luminance and chrominance can be obtained in a transmitter as well as a receiver of, for example, a PAL television system by means of decimating and interpolating three-dimensional filters (time-variant filtering), so that the cross-color and cross-luminance errors are eliminated, but with the drawback of some vertical-temporal aliasing in high-frequency luminance and chrominance.

In the NTSC and in the PAL systems the crosstalk between chrominance and luminance components can be reduced by using so-called comb filters. In the SECAM system, as currently used, the use of comb filters is impossible because of the frequency modulation method used in the SECAM system, so that there is no reliable phase relationship between successive or adjacent lines.

According to the following aspect of the invention, it is proposed to modifiy the transmitted signal in such a way that there is a fixed phase relationship for every two adjacent picture lines, which leads to the possibility of separating chrominance and luminance components. At the encoder end this can in principle be realised as is shown in Fig. 6a. During the first field period (of 20 ms) of a frame period (40 ms), the switches $S_2$ and $S_3$ are in the state shown and a fully unmodified SECAM signal is transmitted. During the second field period, $S_2$ and $S_3$ are in the other state and the delay of the chrominance information is 312 line periods, the same applies to the high-frequency luminance components. On the basis of the SECAM standard a delay of 312 line periods results (because 312 is a sixfold) in that the phases of the chrominance carriers are always in phase opposition during the second field period as compared with 312 line periods earlier.

This provides the possibility of separating the high-frequency luminance components from the chrominance compoments, as is shown in Fig. 7. The diagrams of Figs. 6a and 7 are examples of a number of possibilities. Fig. 6b shows a slightly different embodiment of the extended encoder according to the present aspect of the invention. In this case an averaging operation is carried out for two successive picture lines. The digital signal treatment is used to ensure that the signals are exactly equal after 312 line periods.

The most important advantage of the proposal is that the description of the SECAM standard need not be modified. The method can thus be introduced without any standard modification. In the above proposal, the switches $S_2$ and $S_3$ in the encoder and the decoder are yet to be coupled in phase.

In the time-variant filtering SECAM encoder according to the invention shown in Fig. 6a, red (R), green (G) and blue (B) picture signals at inputs 601, 603 and 605 are applied to a matrix circuit 607 for obtaining a luminance signal Y and color difference signals R-Y and B-Y. The luminance signal Y is applied via a delay 609 to a low-pass filter (LPF) 611 for obtaining a low-frequency luminance signal Yl and to a high-pass filter (HPF) 613 for obtaining a high-frequency luminance signal Yh. The high-frequency luminance signal Yh is applied after A/D conversion in A/D converter 615, to a first switching contact of the change-over switch $S_2$

8

operating at the picture frequency (fp), and to a second switching contact of the switch S₂ via a delay 617 having a delay time of one field period. After D/A conversion in a D/A converter 619, the time-variant filtered high-frequency luminance signal Yh* is applied to an adder 621 to which also the low-frequency luminance signal delayed by a compensating delay 623 is applied. The adder 621 applies the time-variant filtered luminance signal Y* to a luminance signal input 625 of a SECAM encoder 627. The color difference signals R-Y and B-Y are applied to respective switching contacts of a change-over switch S₁ operating at half the line frequency (1/2 fl) which thus supplies either the one or the other color difference signal in a line alternating manner in accordance with the SECAM standard. After low-pass filtering by a low-pass filter (LPF) 629 and A/D conversion by an A/D converter 631, the supplied color difference signal is applied to a first switching contact of a change-over switch S₃ and to a second switching contact of the switch S₃ operating at the picture frequency (fp) via a delay 633 having a delay time of one field period. After D/A conversion by a D/A converter 635, the time-variant filtered color difference signal (R-Y)* or (B-Y)* is applied by the switch S₃ to a color difference signal input 637 of the SECAM encoder 627. An output 639 of the SECAM encoder applies a time-variant filtered SECAM encoded video signal.

The part of the Figure between the broken lines A and A′ according to the invention is added to the otherwise known SECAM encoder.

Fig. 6b shows an alternative embodiment of the time-variant filter circuit shown between the broken lines A and A′ in Fig. 6a. In Fig. 6b averaging takes place over two picture lines, which is an embodiment of the vertical-temporal low-pass filtering of the block 201 in Fig. 3a. The A/D and D/A converters 615 and 619 are positioned in Fig. 6b at the beginning and the end, respectively, of the luminance signal path so that the analog filters 611 and 613 and adder 621 of Fig. 6a are replaced in Fig. 6b by their digital equivalents 611′, 613′ and 621′, respectively. In the high-frequency luminance signal path an averager comprising a field delay 641 and an adder 643 is arranged between the high-pass filter 613′ and the junction point c_y in Fig. 6b. The delay period of the compensating delay 623′ is extended by one field period as compared with the delay period of its equivalent circuit 623 in Fig. 6a. In the chrominance signal path an averager comprising a field delay 645 and an adder 647 is arranged between the A/D converter 631 and the junction point c_c.

In the time-variant filtering SECAM decoder according to the invention, shown in Fig. 7, the time-variant filtered encoded SECAM video signal is applied to an input 701. The video signal is applied to a low-pass filter (LPF) 703 for obtaining a low-frequency luminance signal Yl, and to a high-pass filter (HPF) 705 for obtaining a time-variant filtered high-frequency video signal Yh*+C*. The high-frequency video signal is applied via an A/D converter 707 to a luminance-chrominance splitter 715 comprising a delay 709, a subtractor 711 and an adder 713 for obtaining a time-variant filtered high-frequency luminance signal Yh* and a time-variant filtered chrominance signal C*.

The high-frequency luminance signal Yh*, which is time-variant filtered in the encoder, is applied to a time-variant filter comprising a delay 717 and a change-over switch S₂′ operating at the picture frequency (fp) for obtaining a high-frequency luminance signal Yh.

The chrominance signal C*, which is time-variant filtered in the encoder, is applied to a time-variant filter comprising a delay 719 and a change-over switch S₃′ operating at the picture frequency (fp) for obtaining a chrominance signal C. The high-frequency luminance signal Yh is applied via a D/A converter 721 to an adder 723 to which also the low-frequency luminance signal Yl is applied for obtaining a luminance signal Y which is applied to a luminance signal input 725 of a SECAM decoder 727. The chrominance signal C is applied via a D/A converter 729 to a chrominance signal input 731 of the SECAM decoder 727. Outputs 733, 735, 737 of the SECAM decoder 727 supply a red (R), green (G) and a blue (B) picture signal, respectively.

The part of the Figure between the broken lines B and B′ according to the invention is added to the otherwise known SECAM decoder.

In the following part of this description, a first subchannel will be described which can be used to encode additional information into the picture information portion of a PAL TV signal. The present part of the description refers to Figs. 8 through 26 of the drawings.

It will be apparent from the following description that it is possible to modulate extra information on the standard PAL subcarrier so that this extra information can be separated again from the YUV information. It may be clear that a satisfactory separation means that measures have to be taken at the extended encoder end as well as at the extended decoder end.

This possibility of transmitting extra information can be utilised in different manners; an addition to the existing signal components (luminance and both chrominance signals) by means of analog signals is feasible, or the transmission of arbitrary digital information.

The possibility of separating extra signals (D) on the one hand, and luminance (Y) and chrominance (UV) signals on the other hand, is based on a combination of time-variant filtering and on establishing a

9

quadrature relationship between U(t) + SW(t)V(t) on the one hand, in which SW(t) is line alternating +/-1, and Dbb(t) on the other hand (the baseband information of the modulate D(t)). The separation will have to be performed in the extended decoder according to the present aspect of the invention, where it is assumed that a signal is received, which is given by

$S_1(t) = Y(t) + D(t) + U(t)SIN(2.PI.Fsc.t) + SW(t)V(t)COS(2.PI.Fsc.t)$     (1)

in which Fsc is equal to the chrominance subcarrier frequency

Fsc = (283 3/4 + 1/625)Fl,

in which Fl is the line frequency.

By means of a band splitter filter the high frequencies (for example above 3 MHz) are selected from this signal $S_1$, which high-frequency part is represented by

$S_2(t) = Yhf(t) + D(t) + U(t)SIN(2.PI.Fsc.t) + SW(t)V(t)COS(2.PI.Fsc.t)$,     (2)

in which Yhf denotes the high-frequency part of the luminance signal Y. Subsequently signals $S_3(t)$ and $S_4(t)$ are obtained by subtracting and adding, respectively, $S_2(t)$ and $S_2(t-313Tl)$, in which Tl denotes the line period.

Now it holds that

$SIN(2.PI.Fsc(t+313Tl)) = COS(2.PI.Fsc.t+PI/625)$

$= \sim COS(2.PI.Fsc.t)$     (3)

$COS(2.PI.Fsc(t+313Tl)) = -SIN(2.PI.Fsc.t+PI/625)$

$= \sim -SIN(2.PI.Fsc.t)$     (4)

so that

$S_3(t) = Yhf(t) - Yhf(t+313Tl) + U(t)SIN(2.PI.Fsc.t) - U(t+313Tl)COS(2.PI.Fsc.t) + SW(t)V(t).COS(2.PI.Fsc.t)$
$+ SW(t+313Tl)V(t+313Tl)SIN(2.PI.Fsc.t) + D(t) - D(t+313Tl)$     (5)

Since SW(t+313Tl) = -SW(t) and if it is also assumed that the extended encoder according to the present aspect of the invention has ensured that

$Yhf(T+313TL) = Yhf(t)$     (6)

$U(t+313Tl) = U(t)$     (7)

$V(t+313Tl) = V(t)$     (8)

$D(t+313Tl) = -D(t)$     (9)

then it follows after some calculation that

$S_3(t) = 2D(t) + SQRT(2).[U(t)-SW(t)V(t)].SIN(2.PI.Fsc.tPI/4)$,     (10)

in which SQRT denotes the square root function.

It can also be found that

$S_4(t) = 2Yhf(t) + SQRT(2).[U(t)+SW(t)V(t)].COS(2.PI.Fsc.t-PI/4)$     (11)

To be able to separate the extra signal D in $S_3$ from the modulate of U-SW.V, a quadrature relationship is required, as stated hereinbefore, and thus D(t) must be defined as

$D(t) = Dbb(t)COS(2.PI.Fsc.t-PI/4)$     (12)

If Dbb(t), U(t) and V(t) are all modulated in double sideband on (different phases of) the subcarrier and if they are also applied as such to the extended decoder according to the present aspect of the invention, a perfect separation between Dbb(t) and U(t)-SW(t)V(t) could be realised if in the extended decoder the subcarrier phase would be known. In practice both U(t) and V(t) are, however, partly transmitted in single sideband due to the limitation of the video bandwidth to 5 MHz (in the case of PAL/BG). This means that after demodulation there will be quadrature crosstalk between Dbb(t) and U(t)-SW(t)V(t) which is undesirable. This quadrature crosstalk can be avoided if a choice is made from 2 options:

(a) the bandwidth of Dbb is limited to that portion of the bandwidth of U and V which is transmitted in double sideband, or

(b) both U and V are transmitted in double sideband and the bandwidth of Dbb is larger than the bandwidth of U and V.

Option (a) means that the bandwidth of Dbb must be limited to approximately 550 kHz (in PAL/BG) which is rather small, whereas option (b) does not have this restriction. On the other hand the UV bandwidth in option (b) is limited to approximately 550 kHz. Option (b) essentially means that D(t) must be a vestigial sideband modulate so that in that case D(t) must be redefined as

$D(t) = VSB \{Dbb(t).COS(2.PI.Fsc.t-PI/4)\}$     (13)

in which the operator VSB {.} indicates a vestigial sideband filter a possible amplitude characteristic $|H_{VSB}(f)|$ of which is shown as a function of the frequency f in Fig. 8. It can simply be shown that D(t+313Tl) =

$VSB\{-Dbb(t+313Tl).SIN(2.PI.Fsc.t-PI/4)\}$     (14)

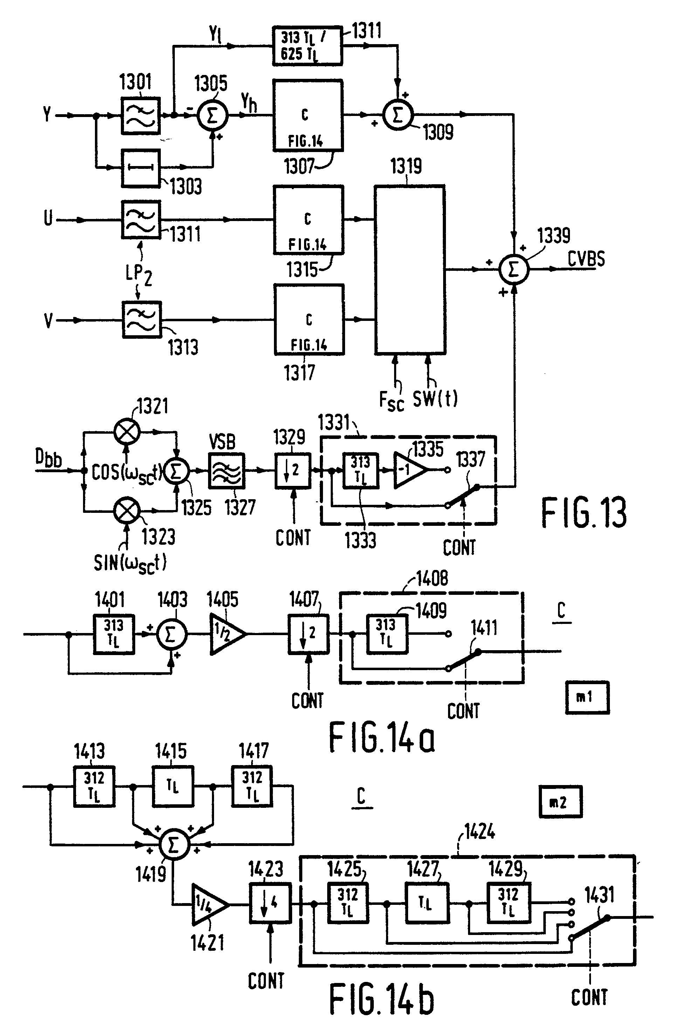

so that, even if Dbb(t+313Tl) were equal to -Dbb(t), D(t+313Tl) would not be equal to -D(t). Thus it must be ensured at the encoder end that the value of D at instant t0 is repeated with an opposite sign at instant t0 is repeated with an opposite sign at intant t0+313Tl (see for example Fig. 13).

Assuming that the regenerated subcarrier has a phase error PHI, the quadrature demodulation of $S_3$ with
SQRT(2).COS(2.PI.Fsc.t-PI/4-PHI) and SQRT(2).SIN(2.PI.Fsc.t-PI/4-PHI), respectively, results in
$$Dbb'(t) = LP1\{S_3(t).SQRT(2).COS(2.PI.Fsc.t-PI/4-PHI)\}$$
$$= SIN(PHI).LP1\{U(t)-SW(t)V(t)\} + COS(PHI).LP1\{Dbb(t)\}/SQRT(2) \qquad (15)$$
and
$$S_5(t) = LP2\{S_3(t).SQRT(2).SIN(2.PI.Fsc.t-PI/4-PHI)\}$$
$$= COS(PHI).LP2\{U(t)-SW(t)V(t)\}-SIN(PHI).LP2\{Dbb(t)\}/SQRT(2) \qquad (16)$$
in which operator LP1{.} indicates a low-pass filter having a bandwidth which is equal to that of Dbb(t), and
in which operator LP2{.} indicates a low-pass filter having a bandwidth which is equal to that of UV.

At this point (apart from the crosstalk as a result of the phase error PHI) Dbb has been regained. For regaining YUV there are two methods M1 and M2 which are distinguished by the presence or absence of cross-color and cross-luminance.

The simplest method (M1) regains Yhf from $S_4$ by means of the conventional method, namely a notch filter:
$$Yhf'(t) = NOTCH\{S_4(t)\}$$
$$= NOTCH\{Yhf(t)\} + XL(t) \qquad (17)$$
XL is the cross-luminance caused by U and V. On the other hand we find that
$$S_6(t) = LP\{S_4(t).SQRT(2).COS(2.PI.Fsc.t-PI/4-PHI)\}$$
$$= COS(PHI).LP2\{U(t)+SW(t)V(t)\} + XC(t) \qquad (18)$$
in which XC is the cross-color caused by Yhf. Finally, U and V are regained in accordance with
$$U'(t) = [S_5(t)+S_6(t)]/2 \qquad (19)$$
$$V'(t) = SW(t).[S_6(t)-S_5(t)]/2 \qquad (20)$$

In a more complex method (M2) a perfect separation between luminance signal Y and chrominance signals UV is possible. For this purpose the signal
$$S_7(t) = S_4(t+312TI) \qquad (21)$$
is generated. Now it holds that SW(t+312TI) = SW(t) and if it is also assumed that in the encoder, the time-variant filtering has ensured that Yhf(t+312TI) = Yhf(t)     (22)
$$U(t+312TI) = U(t) \qquad (23)$$
$$V(t+312TI) = V(t) \qquad (24)$$
(if these assumptions are not made, this method leads in any case to a reduction of certain XC components);
then it follows after some calculation (ignoring the phase PI/624) that $S_7(t) = 2Yhf(t) - SQRT(2).[U(t)+SW(t)-].COS(2.PI.Fsc.t-PI/4)$     (25)
so that
$$Yhf'(t) = [S_4(t)+S_7(t)]/4 \qquad (26)$$
and
$$S_8(t) = LP_2\{[S_4(t)-S_7(t)].SQRT(2).COS(2.PI.Fsc.t-PI/4-PHI)\}/2$$
$$= COS(PHI).LP2\{U(t)+SW(t)V(t)\} \qquad (27)$$
so that
$$U'(t) = [S_5(t)+S_8(t)]/2 \qquad (28)$$
$$V'(t) = SW(t).[S_8-S_5(t)]/2 \qquad (29)$$
In summary we find that the same Yhf, U, V and Dbb information must be present on lines n and n+313 in the method M1. With reference to Yhf, U and V this information is regenerated by means of a 2-dimensional decimating filter (this is time-variant by definition). However, the original (interlaced) sampling structure must be regained, which must be done by means of a 2-dimensional (vertical-temporal) interpolating filter (and thus also time-variant) with reference to Yhf, U and V. The simplest interpolator repeats the Yhf, U and V information found on line n and n+313.

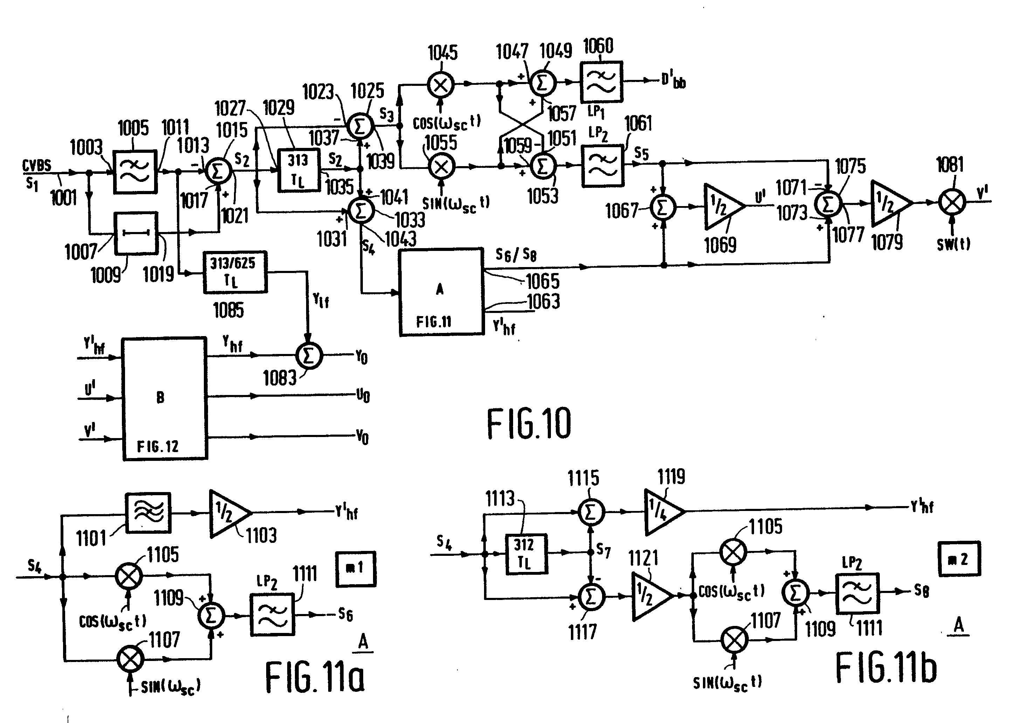

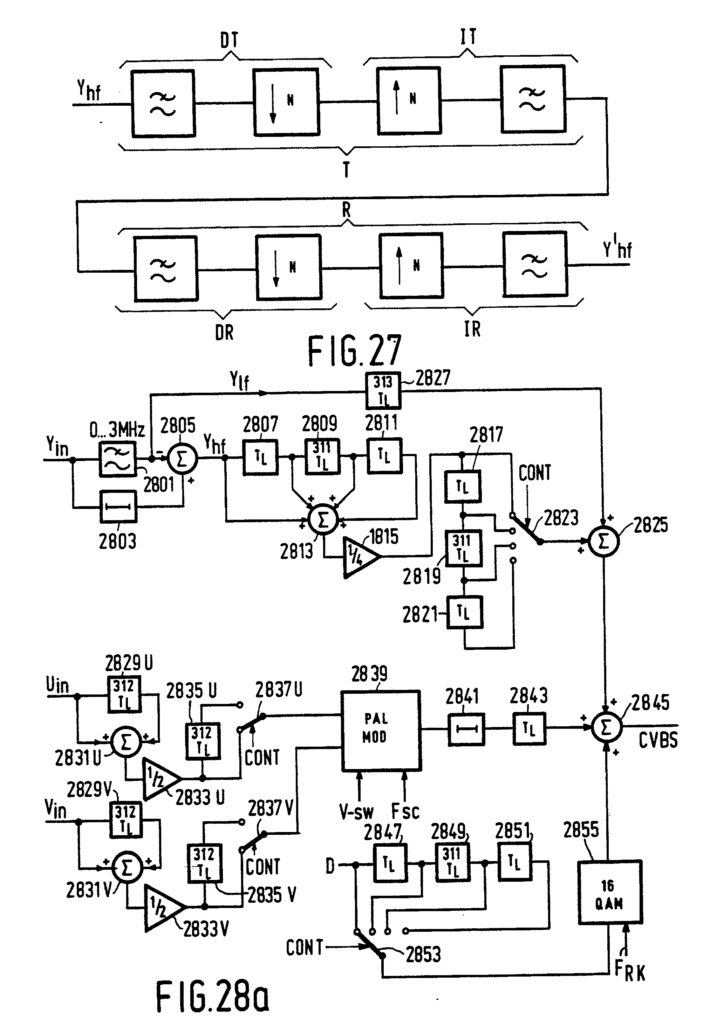

In method M2 the same Yhf, U and V information must be present on lines n, n+313, n+312 and n+625, while within these four lines the same D information must be present pairwise on lines n and n+313 on the one hand and n+312 and n+625 on the other hand, but then with the opposite sign as is shown in Fig. 9a. Here again the original sampling structure must be regained by means of a 2-dimensional interpolating filter with reference to Yhf, U and V. The simplest interpolator repeats the Yhf, U and V information found on lines n, n+312, n+313 and n+625. This implies that the basic structure of time-variant filtering as shown in Fig. 3a, in which the sampling rate was decreased and increased by a factor of 2, has to be replaced by the more general structure as shown in Fig. 27, N being equel to 4 in the present case.

The time-variant filtering creates artefacts which are less disturbing in method M1 as compared with method M2. The crosstalk of D on UV can be minimised by excluding direct current (DC) information from Dbb (assuming that low-frequency UV interference components are most disturbing). If Dbb is to be a digital signal, it can be deprived from low-frequency components by means of a suitable channel encoding. The amplitude of Dbb of course determines the amplitude of the interference components, but also whether an intermediate frequency automatic gain control (AGC) or a sync regenerator continues to operate satisfactorily. Furthermore, the crosstalk of D on Y is more disturbing as the bandwidth of Dbb is larger. Finally, the compatibility is influenced by the type of Dbb information (is it correlated or uncorrelated with YUV) and the mode of modulation (analog/digital, AM, PM, FM).

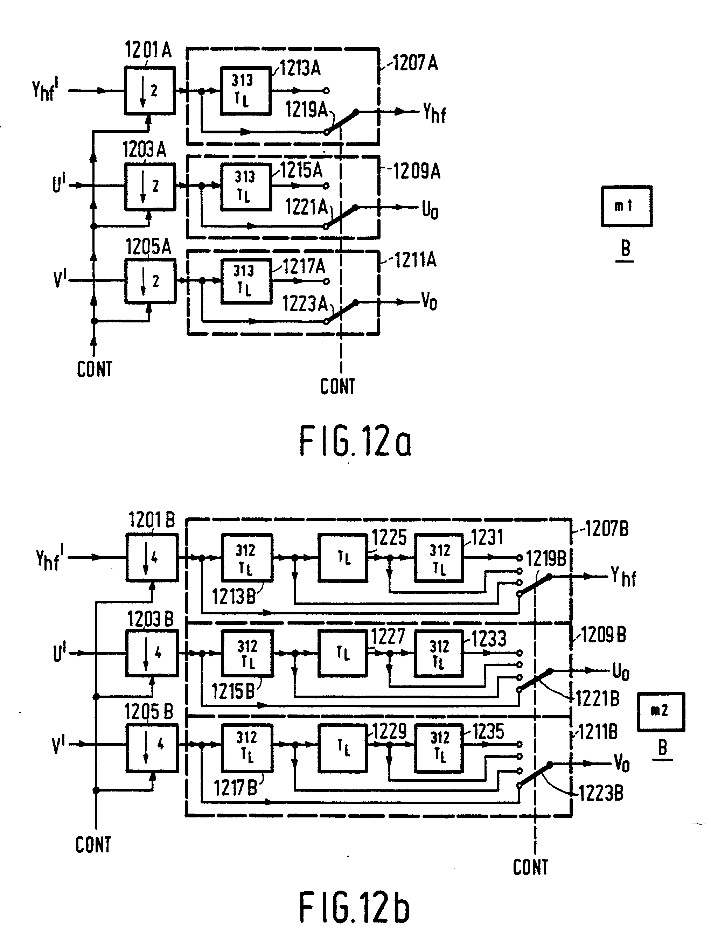

Fig. 10 shows a possible embodiment of the extended decoder according to the present aspect of the invention, in which the blocks denoted by "A" and "B" are specified in Figs. 11 and 12, respectively. Only the compensating delays which are evidently required are indicated. The time-variant filtering in the extended decoder comprises a decimating filter ans an interpolating filter, which interpolating filter can be made as complex as is desirable. However, the simplest interpolators (so-called repeaters) are shown in Figs. 11 and 12. It is apparent from the preceding paragraphs that there are two methods of decoding YUV. Method M1 relates to Figs. 11a and 12a, while method M2 relates to Figs. 11b and 12b. Fig. 13 shows a possible embodiment of the extended encoder, while the block denoted by "C" is further specified in Fig. 14. Fig. 14a relates to method M1, while Fig. 14b relates to method M2. The time-variant filtering in the extended encoder also comprises an interpolating filter and a decimating filter, which decimating filter can be made as complex as is desirable. However, the simplest decimator (so-called averager) is shown in Fig. 14. The control signals (CONT) are determined by an "arrangement" (see Fig. 9) of the pair of 2 lines and the block of 4 lines in the vertical-temporal domain; this arrangement essentially indicates the manner of sample rate increase and decrease. It will be obvious that these control signals should be synchronised with each other in the encoder and the decoder.

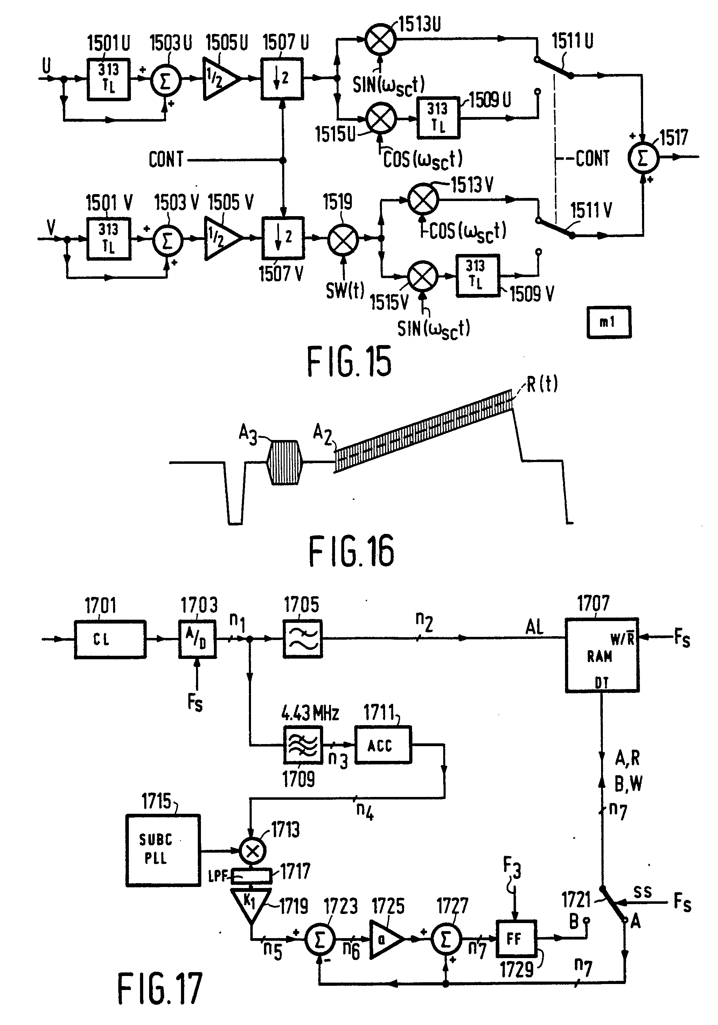

In the preceding paragraphs, approximations in the form of $COS(x + PI/625) = \sim COS(x)$ are made in the derivation of the final formulas. If these approximations are not permissible, the same final formulas can still be obtained (however, without approximations) if the section of the extended encoder relating to U and V is arranged to be different, as is shown in Fig. 15 for method M1 (the extended decoder remains the same). The standard decoder then has a fixed phase error of PI/625 (approximately 0.29 degrees) on the second line of the pair of two (n and n + 313), which phase error is very acceptable.

Fig. 10 shows an extended decoder according to the invention for decoding a video signal obtained by compatible encoding of extra information in the active video portion of, for example a PAL signal by means of an extra modulation of the chrominance sub-carrier and time-variant filtering. The video signal $S_1$ to be decoded and indicated by CVBS is applied to an input 1001 of the extended decoder. The input 1001 is connected to an input 1003 of a low-pass filter 1005 and to an input 1007 of a compensating delay 1009. An output 1011 of the low-pass filter 1005 is connected to an inverting input 1013 of a subtractor 1015, a non-inverting input 1017 of which is connected to an output 1019 of the delay 1009. An output 1021 of the subtractor 1015 supplies the high-frequency signal $S_2$ (formula 2) and the output 1011 of the low-pass filter 1005 supplies the low-frequency luminance signal Ylf. The low-pass filter 1005, the delay 1009 and the subtractor 1015 combined form said band splitter filter.

The output 1021 of the subtractor 1015 is connected to an inverting input 1023 of a subtractor 1025, to an input 1027 of a delay 1029 having a delay of one field plus half a line period, and to a first input 1031 of an adder 1033. An output 1035 of the delay 1029 is connected to a non-inverting input 1037 of the subtractor 1025. The subtractor 1025 supplies the signal $S_3$ from an output 1039. The output 1035 of the delay 1029 is further connected to a second input 1041 of the adder 1033 which supplies the signal $S_4$ from an output 1043.

The signal $S_3$ is applied via a multiplier 1045 having a multiplication factor of $\cos(\omega_{sc}t)$ to a first input 1047 of an adder 1049 and to an inverting input 1051 of a subtractor 1053. The signal $S_3$ is also applied via a multiplier 1055 having a multiplication factor of $\sin(\omega_{sc}t)$ to a second input 1057 of the adder 1049 and to a non-inverting input 1059 of the subtractor 1053. The signal $D'_{bb}$ is obtained via the low-pass filter (LP1) 1060 from the adder 1049 (formula 15). The signal $S_5$ is obtained via the low-pass filter (LP2) 1061 from the subtractor 1053 (formula 16).

The signal $S_4$ at the output 1043 of the adder 1033 is applied to a block A which is shown in greater detail in Fig. 11a for the method M1 and in Fig. 11b for the method M2.

An output 1063 of the block A supplies the signal $Y'_{hf}$ in accordance with formula 17 (method M1, Fig. 11a) or formula 26 (method M2, Fig. 11b). An output 1065 of the block A supplies the signal $S_6$ in accordance with formula 18 (method M1, Fig. 11a) or the signal $S_8$ in accordance with formula 27 (method M2, Fig. 11b).

The signals $S_5$ and $S_6/S_8$ yield the signal $U'$ in accordance with formula 19 (method M1) or formula 28 (method M2) after averaging by an adder 1067 and a halving circuit 1069. The signals $S_5$ and $S_6/S_8$ are further applied to an inverting input 1071 and a non-inverting input 1073, respectively, of a subtractor 1075, an output 1077 of which supplies the signal $V'$ in accordance with formula 20 (method M1) or formula 29 (method M2) via a halving circuit 1079 and a multiplier 1081.

The signals $Y'_{hf}$, $U'$ and $V'$ are applied to a block B which is shown in greater detail in Fig. 12a for the method M1 and in Fig. 12b for the method M2. The block B supplies a high-frequency luminance signal $Y_{hf}$ and two regained chrominance signals $U_0$ and $V_0$. The high-frequency luminance signal $Y_{hf}$ and the low-frequency luminance signal $Y_{lf}$ delayed by a delay time of one field or frame period via a compensating delay 1085 are combined to a regained luminance signal $Y_0$.

Figs. 11a and 11b show the block A of Fig. 10 for the methods M1 and M2, respectively in greater detail. In Fig. 11a the signal $Y'_{hf}$ is obtained from the signal $S_4$ by means of a notch filter 1101 and a halving circuit 1103. The signal $S_4$ is further applied to an adder 1109 via a multiplier 1105 having a multiplication factor of $\cos(\omega_{sc}t)$ on the one hand and a multiplier 1107 having a multiplication factor of $\sin(\omega_{sc}t)$ on the other hand, which adder supplies the signal $S_6$ via a low-pass filter (LP2) 1111. In Fig. 11b corresponding elements have the same reference symbols as in Fig. 11a. In Fig. 11b the signal $S_4$ is first averaged over a field period minus half a line period by means of a delay 1113 and an adder 1115 (output signal $S_7$). The adder 1115 supplies the signal $Y'_{hf}$ via a multiplier 1119 having a multiplication factor of 1/4. A subtractor 1117 applies the difference between the signals $S_4$ and $S_7$ to the multipliers 1105 and 1107 via a halving circuit 1121. The low-pass filter 1111 supplies the signal $S_8$ (formula 27).

In Figs. 12a and 12b the block B shown in Fig. 10 is shown in greater detail for the methods M1 and M2, respectively. In Figs. 12a and 12b the block B comprises for each signal $Y'_{hf}$, $U'$ and $V'$ a decimating filter 1201A/B, 1203A/B and 1205A/B controlled by the control signal CONT and an interpolating filter 1207A/B, 1209A/B and 1211A/B, respectively, controlled by the control signal CONT. The decimating filters 1201A, 1203A and 1205A of Fig. 12a decrease the sample rate by a factor of 2, and the interpolating filters 1207A, 1209A and 1211A increase the sample rate by the same factor of 2. The decimating filters 1201B, 1203B and 1205B of Fig. 12b decrease the sample rate by a factor of 4 and the interpolating filters 1207B, 1209B and 1211B increase the sample rate by the same factor of 4. The interpolating filters 1207A, 1209A and 1211A of Fig. 12a each comprise a field delay 1213A, 1215A and 1217A and a change-over switch 1219A, 1221A and 1223A, respectively, for switching between an input and an output of the field delay, to supply the signals $Y_{hf}$, Uo and Vo. The interpolating filters 1207B, 1209B and 1211B of Fig. 12b each comprise a series arrangement of a field delay 1213B, 1215B and 1217B, a line delay 1225, 1227 and 1229 and a field delay 1231, 1233 and 1235, as well as a change-over switch 1219B, 1221B and 1223B for switching between an input of the field delay 1213B, 1215B and 1217B and outputs of the delays 1213B, 1215B and 1217B; 1225, 1227 and 1229; and 1231, 1233 and 1235, to supply the signals Yhf, Uo and Vo, respectively.

Fig. 13 shows an extended encoder according to the invention for obtaining a compatible encoding of extra information in the active video portion of, for example a PAL signal by means of an extra modulation of the chrominance sub-carrier and time-variant filtering. A luminance signal Y to be encoded is applied to a band splitter filter comprising a low-pass filter 1301, a compensating delay 1303 and a subtractor 1305 for obtaining a low-frequency luminance signal Yl and a high-frequency luminance signal Yh. The high-frequency luminance signal Yh is applied via a time-variant filter (C) 1307 shown in greater detail in Fig. 14, to an adder 1309 to which also the low-frequency luminance signal Yl delayed by a compensating delay 1311 is applied.

The chrominance signals U and V are applied via low-pass filters 1311, 1313 and time-variant filters (C) 1315 and 1317 to U and V inputs, respectively, of a conventional color modulator 1319. The color modulator 1319 further receives a chrominance sub-carrier signal Fsc and the line-alternating signal SW(t).

The baseband extra signal Dbb is applied to a multiplier 1321 having a multiplication factor of $\cos(\omega_{sc}t)$ and to a multiplier 1323 having a multiplication factor of $\sin(\omega_{sc}t)$. An adder 1325 combines output signals of the multipliers 1321 and 1323 for obtaining a signal $D_{bb}{}^*\cos(\omega_{sc}t)-\pi/4$, see formula (12). This signal is applied via a vestigial sideband filter (VSB) 1327 to a time-variant filter comprising a decimating filter 1329 and an interpolating filter 1331. The interpolating filter 1331 comprises a series arrangement of a field delay 1333 and an inverter 1335, as well as a change-over switch 1337 which switches between an input signal of the interpolating filter 1331 and an output signal of the inverter 1335. The decimating filter 1329 and the switch 1337 are both controlled by the picture frequency control signal CONT.

An adder 1339 combines the output signals of the adder 1309, the color modulator 1319 and the interpolating filter 1331 to an extended encoded video signal CVBS.

In Figs. 14a and 14b the time-variant filter circuit denoted by block C in Fig. 13 is shown in greater detail, in Fig. 14a for the method M1 and in Fig. 14b for the method M2. In Fig. 14a an input signal is averaged over a field period plus half a line period by a field memory 1401, an adder 1403 of an input and an output signal of the field memory 1401, and a halving circuit 1405 halving an output signal of the field memory 1401. Subsequently, the circuit 1407 halves the sample rate of the signal thus averaged and finally the signal decreased in sample rate is applied to an interpolating filter 1408. The interpolating filter 1408 is implemented in the manner described hereinbefore with a field memory 1409 and a change-over switch 1411 which switches between an input and an output signal of the field memory 1409. The sample rate halving circuit 1407 and the switch 1411 are both controlled by the control signal CONT.

In Fig. 14b in which in accordance with method M2 four signals must be rendered equal to each other, the average of signals of four pixels spaced apart over a field period minus half a line period, a line period and again a field period minus half a line period is determined first. To this end an input signal of the time-variant filter of Fig. 14b is applied to a series arrangement of a field memory 1413, a line memory 1415 and a field memory 1417. An adder 1419 calculates the sum of the input signal and of output signals of the memories 1413, 1415 and 1417. A multiplier 1421 divides this sum by four. Subsequently, the sample rate is decreased by a factor of four by a circuit 1423. Finally, the signal thus obtained is supplied four times by means of an interpolating filter 1424. The interpolating filter 1424 comprises a series arrangement of a field memory 1425, a line memory 1427 and a field memory 1429, as well as a change-over switch 1431 switching between an input signal of the field memory 1425 and output signals of the memories 1425, 1427 and 1429. The sample rate decreasing circuit 1423 and the switch 1431 are again controlled by the control signal CONT.

Fig. 15 shows a modified embodiment of the chrominance section of the extended encoder according to the present aspect of the invention. The elements 1501 U/V, 1503 U/V, 1505 U/V, 1507 U/V, 1509 U/V and 1511 U/V correspond to the elements 1401, 1403, 1405, 1407, 1409 and 1411, respectively, of Fig 14a. Contrary to the embodiment of Figs. 13 and 14a, outputs of the sample rate decreasing circuits 1507 U/V are now coupled via a first signal path having a multiplier 1513 U/V multiplying by the factor $\sin(\omega_{sc}t)$, and via second signal path having a multiplier 1515 U/V multiplying by the factor $\cos(\omega_{sc}t)$ and the field delays 1509 U/V, to respective switching contacts of the change-over switches 1511 U/V. Output signals of the change-over switches 1511 U/V are added by adder 1517, an output signal of which corresponds to the output signal of the conventional color signal modulation circuit 1319 of Fig. 13. In the V signal path, a multiplier 1519 multiplying by the signal SW(t) is arranged between the output of the sample rate decreasing circuit 1507 V and inputs of the multipliers 1513 V and 1515 V.

To sum up the above-described subchannel employing technique, an extra signal is added to the active video portion, i.e. the picture information containing portion of e.g. a PAL television signal in a compatible way, while using time-variant filtering. This extra signal is modulated on the same subcarrier as the color difference signals, but in a different phase relationship. The "space" in this spectrum for this extra signal is obtained by limiting the vertical-temporal resolution of high-frequency luminance and of the color difference signals.

As is apparent from the formulas (15) and (16) for Dbb′ and $S_5$, there is phase quadrature crosstalk between Dbb and U-SW.V in the case of a non-ideally regenerated subcarrier, which crosstalk could be disastrous particularly for Dbb, dependent on the amplitude of Dbb and the value of the phase error. Generally, this phase error comprises two components:
- a differential phase error produced in the channel, and
- a constant phase error produced at the decoder end.
The latter error can be minimised by means of a sophisticated design of the subcarrier phase-locked loop (PLL), but especially the differential phase error can hardly be influenced. The differential phase error is produced wherever non-linearities are present and is assumed to be a function of the amplitude of the video (CVBS) signal ($S_1$).

If this function were known, the phase error could theoretically be compensated in two different manners:
- eliminate the phase error as a function of $S_1$ directly in the regenerated subcarrier phase (internally in the PLL), or
- eliminate the phase error as a function of $S_1$ only where it introduces the gravest effects, namely the quadrature crosstalk between Dbb and U-SW.V. If the low-pass filters LP1 and LP2 are chosen to be equal to eachother, Dbb can be found back, with a phase error PHI, in accordance with:

$$Dbb(t) = Dbb'(t).COS(PHI(S_1(t))) - S_5(t).SIN(PHI(S_1(t))), \quad (30)$$

which can be approximated by means of

$$Dbb''(t) = Dbb'(t) - S_5(t).SIN(PHI(S_1(t))). \quad (31)$$

The question remains how the relationship between PHI and $S_1$ can be found. If a signal in accordance with

$$E(t) = R(t) + A2.SIN(2.PI.Fsc.t) \qquad (32)$$

is transmitted during an unused (active) line in the vertical blanking (field retrace), in which R(t) is a linearly decreasing or increasing voltage of peakwhite level to blanking-blanking or vice versa (see also Fig. 16), and in which A2 is much smaller than the peakwhite level, this signal at the receiver end will be approximately equal to

$$E'(t) = R(t) + A2'.SIN(2.PI.Fsc.t - PHI(R(t))), \qquad (33)$$

in which $A2'$ need no longer be equal to A2. If the amplitude of the transmitted color burst is equal to A3, and A3/A2 is given a fixed (and hence known) value (assumed to be P), the ratio between the amplitude of the received color burst (A3$'$) and A2$'$ will still (approximately) be equal to P. The AAC (Automatic Color Control) subsequently controls the amplitude of the received color burst at a nominal value (A3$''$, which is known or which can be measured) whereafter the modified amplitude of the measuring signal (A2$''$) can be found from P.A3$''$. The subcarrier PLL regenerates the subcarrier with the reference phase of the color burst and with the known amplitude A4. Thus, the signals:

$$Q(t) = A2''.A4.SIN(PHI(R(t)))/2$$
$$I(t) = A2''.A4.COS(PHI(R(t)))/2$$

can be found at the outputs of the quadrature demodulator. If simultaneously R(t) is determined by means of a lowpass filter, SIN(PHI(R(t))) and COS(PHI(R(t))) are now known as a function of R(t). This relationship can be stored in a RAM (random access memory) (a digital system is assumed) whose contents can be periodically adapted and which can be read during active video.

Since particularly Q(t) will have a small value and since there is a limited accuracy due to quantisation, the phase error can only be compensated to a given extent by means of the system described. A greater accuracy can be achieved by recursive lowpass filtering of the entire contents of the RAM over a plurality of measure lines of successive frames. A practical system according to these directives is shown in Figs. 17 through 19, in which Fs, a, K1, K2 and n1 .. n7 are numbers to be further determined.

Fig. 17 schematically shows the past of a phase-error compensating circuit employing the measuring line of Fig. 16, which is active during the occurrence of this measuring line. The input signal is clamped by clamp (CL) 1701, and analog to digital (A/D) converted by A/D converter 1703. $F_s$ denotes the sampling frequency. The ramp part R(t) of the digitized measuring line is filtered out by low-pass filter 1705 and applied on address lines AL to random access memory (RAM) 1707. The color burst part (A3) and the small sinusoidal waveform (A2) which was superposed on the ramp function R(t) of the measuring line, are both passed by bandpass filter 1709, because the frequency of the small sinusoidal waveform was chosen to be equal to the color subcarrier frequency of e.g. 4.43 MHz (PAL system). After automatic color control by ACC circuit 1711, demodulation by multiplier 1713 and subcarier PLL 1715, and low-pass filtering by LPF circuit 1717 to remove a $sin^2$ component, a dc signal is obtained which is constant during the color burst period and which has an amplitude which is dependent on the phase error during the occurence of the small sinusoidal waveform. Since this waveform had been superposed on the ramp function R(t), and since the phase error is supposed to be dependent on the amplitude of the video signal, which is about the amplitude of the ramp function R(t), for each possible amplitude of the video signal, information is obtained about the corresponding phase error.

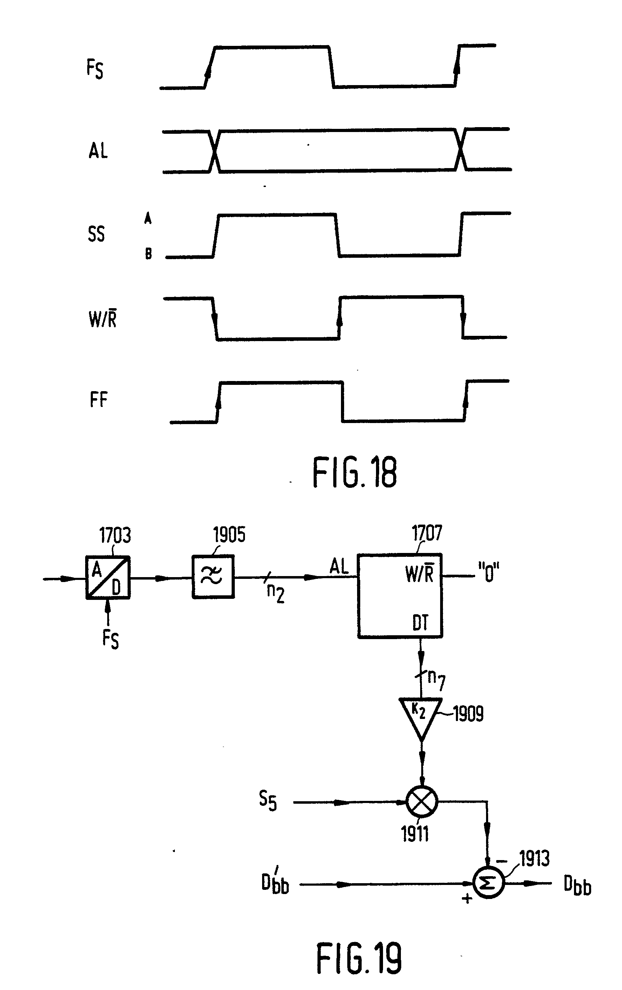

This information is multiplied by multiplier 1719 to obtain a more suitable amplitude. Thereafter, the information is temporally recursively low-pass filtered to increase accuracy. To that extent, for each sampling value as indicated by the amplitude of R(t) on the address lines AL of RAM 1707, the stored information is read from RAM 1707 and passed via switch 1721 (position as shown) to subtraction circut 1723 to be subtracted from the present information. The difference of these information components is suitably attenuated by attenuator 1725, and added to the stored information by adder 1727. The information thus filtered is held in flip-flop (FF) 1729. During the second half of each sampling period (see Fig. 18), flip-flop 1729 supplies the filtered information via switch 1721 (position not shown) to RAM 1707 to be stored at the same address as where the stored information was read from. SS indicates the switching signal of switch 1721, which is identical to the sampling signal $F_s$. W/R indicates the write/read control signal of RAM 1707.

Fig. 19 schematically shows that part of the phase error compensating circuit partially shown in Fig. 17, which is active during the picture information containing part of the video signal. The video signal is applied via A/D converter 1703 and low-pass filter 1905, which may or may not be equal to filter 1705, as address to RAM 1707, so that for each amplitued value of the video signal the corresponding phase error information is retrieved. The retrieved phase error information, suitably multiplied by multiplier 1909, is applied as a multiplying factor to multiplier 1911 for multiplying the singal S5 by the phase error information. The product is subsequently subtracted by subtractor 1913 from the signal S5 to obtain the signal Dbb.

In Figs. 17 and 19, several numerals n1..n7 have been placed next to the connections. These numerals indicate that the digital signals in these circuits may be transmitted with different, suitably chosen accuracies along the respective connections.

In the section about the third aspect of the present invention, a method is described to transmit additional information during active video of a PAL TV signal. The invention is based, inter alia, on the fact that certain video information is made identical pairwise over 313 line periods. This means a signal processing in time so that in picture sequences with motion, temporal artefacts and motion blur occur which are unwanted in some cases.

It has now appeared (inter alia, from simulations) that the same techniques can also be used with 1 instead of 313 line periods. The result is that the signal processing operation is now only effected in the vertical direction so that no motion artefacts occur at all, but only a limitation of the vertical resolution. However, since this signal processing operation is only performed on the high horizontal luminance frequency components and on the chrominance frequency components, it means that this is a limiation of the diagonal resolution as far as luminance is concerned (which is essentially well adapted to the human eye which is approximately isotropic in the spatial domain) and a limitation of the vertical resolution as far as chrominance is concerned (which is also well adapted to the human eye which has a smaller resolving power for color than for brightness).

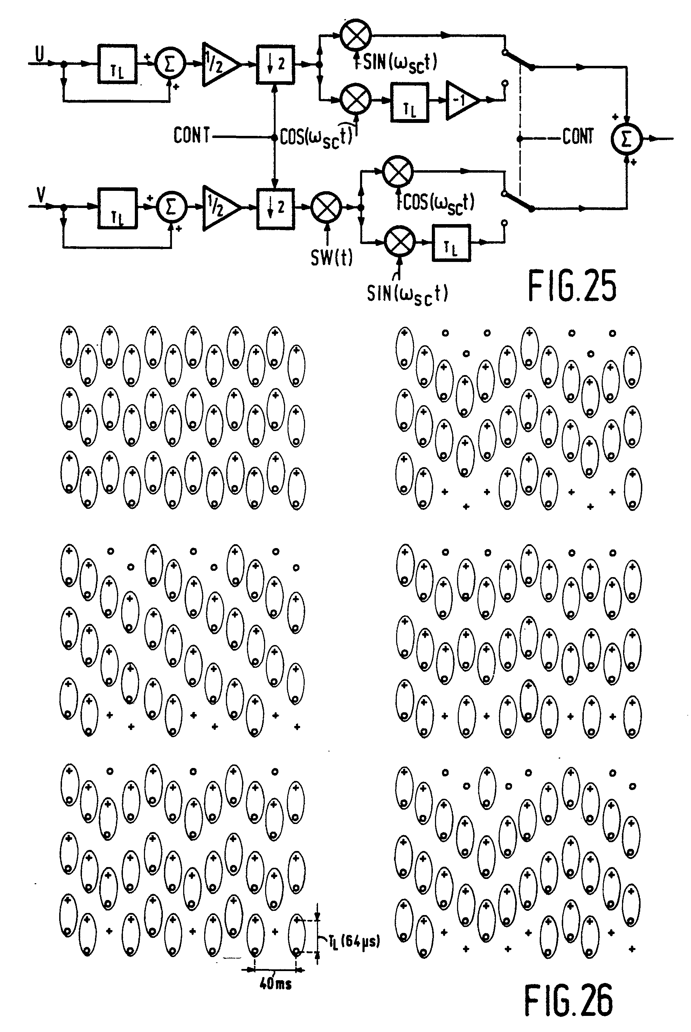

These pairs of two consecutive lines can be given a configuration in different ways in the vertical domain, as is shown in Fig. 26. The artefacts which are generated are influenced by this way of configuration.

The formulas as described in said section can substantially be copied completely by changing 313 into 1, by replacing SIN at a number of locations by COS and by changing som +/- signs. To exclude misunderstanding, the modified text has been incorporated hereinafter.

The possibility of separating the extra signals (D) on the one hand and luminance (Y) and chrominance (UV) on the other hand is based on a combination of time-variant filtering and on establishing a quadrature relationship between $U(t) + SW(t)V(t)$ and $Dbb(t)$ (the baseband information of the modulate $D(t)$). The separation will have to be performed in the extended receiver where it is assumed that a signal is received, which is given by

$$S_1(t) = Y(t) + D(t) + U(t)SIN(2.PI.Fsc.t) + SW(t)V(t)COS(2.PI.Fsc.t). \quad (1)$$

By means of a band splitter filter the high frequencies (for example above 3 MHz) are selected from this signal $S_1$, which high-frequency part is represented by

$$S_2(t) = Yhf(t) + D(t) + U(t)SIN(2.PI.Fsc.t) + SW(t)V(t)COS(2.PI.Fsc.t) \quad (2)$$

Subsequently signals $S_3(t)$ and $S_4(t)$ are obtained by subtracting and adding, respectively, $S_2(t)$ and $S_2(t+Tl)$.

Now it holds that

$$SIN(2.PI.Fsc(t+Tl)) = -COS(2.PI.Fsc.t + 2.PI/625)$$
$$=\sim COS(2.PI.Fsc.t) \quad (3')$$
$$COS(2.PI.Fsc(t+Tl)) = SIN(2.PI.Fsc.t + 2.PI/625)$$
$$=\sim SIN(2.PI.Fsc.t) \quad (4')$$

so that

$$S_3(t) = Yhf(t) - Yhf(t+Tl) + U(t)SIN(2.PI.Fsc.t) + U(t+Tl)COS(2.PI.Fsc.t) + SW(t)V(t).COS(2.PI.Fsc.t) -SW(t+Tl)V(t+Tl)SIN(2.PI.Fsc.t) + D(t) - D(t+Tl) \quad (5')$$

Since $SW(t+Tl) = -SW(t)$ and if it is also assumed that the extended encoder according to the present aspect of the invention has ensured that

$$Yhf(t+Tl) = Yhf(t) \quad (6')$$
$$U(t+Tl) = U(t) \quad (7')$$
$$V(t+Tl) = V(t) \quad (8')$$
$$D(t+Tl) = -D(t) \quad (9')$$

then it follows after some calculation that

$$S_3(t) = 2D(t) + SQRT(2).[U(t) + SW(t)V(t)].COS(2.PI.Fsc.t-PI/4) \quad (10')$$

It can also be found that

$$S_4(t) = 2Yhf(t) + SQRT(2).[U(t)-SW(t)V(t)].SIN(2.PI.Fsc.t-PI/4) \quad (11')$$

To be able to separate the extra signal D in $S_3$ from the modulate of $U+SW.V$, a quadrature relationship is required, as stated hereinbefore, and thus $D(t)$ must be defined as

$$D(t) = Dbb(t)SIN(2.PI.Fsc.t-PI/4) \quad (12)$$

If $Dbb(t)$, $U(t)$ and $V(t)$ are all modulated in double sideband on (different phases of) the subcarrier and if they are also applied as such to the extended decoder according to the present aspect of the invention, a perfect separation between $Dbb(t)$ and $U(t)+SW(t)V(t)$ could be realised if the subcarrier phase in the receiver is known. In practice both U(t) and V(t) are, however, partly transmitted in single sideband due to the limitation of the video bandwidth to 5 MHz (in the case of PAL/BG). This means that after demodulation there will be quadrature crosstalk between Dbb(t) and U(t) + SW(t)V(t) which is undesirable. This quadrature crosstalk can be avoided if a choice is made from 2 options:

(a) the bandwidth of Dbb is limited to that portion of the bandwidth of U and V which is transmitted in double sideband, or

(b) both U and V are transmitted in double sideband and the bandwidth of Dbb is larger than the bandwidth of U and V.

Option (a) means that the bandwidth of Dbb must be limited to approximately 550 kHz (in PAL/BG) which is rather small, whereas option (b) does not have this restriction. On the other hand the UV bandwidth in option (b) is limited to approximately 550 kHz. Option (b) essentially means that D(t) must be a vestigial sideband modulate so that in that case D(t) must be redefined as

$$D(t) = VSB \{Dbb(t).SIN(2.PI.Fsc.t-PI/4)\}. \quad (13)$$

It can simply be shown that

$$D(t+TI) = VSB\{-Dbb(t+TI).COS(2.PI.Fsc.t-PI/4)\} \quad (14')$$

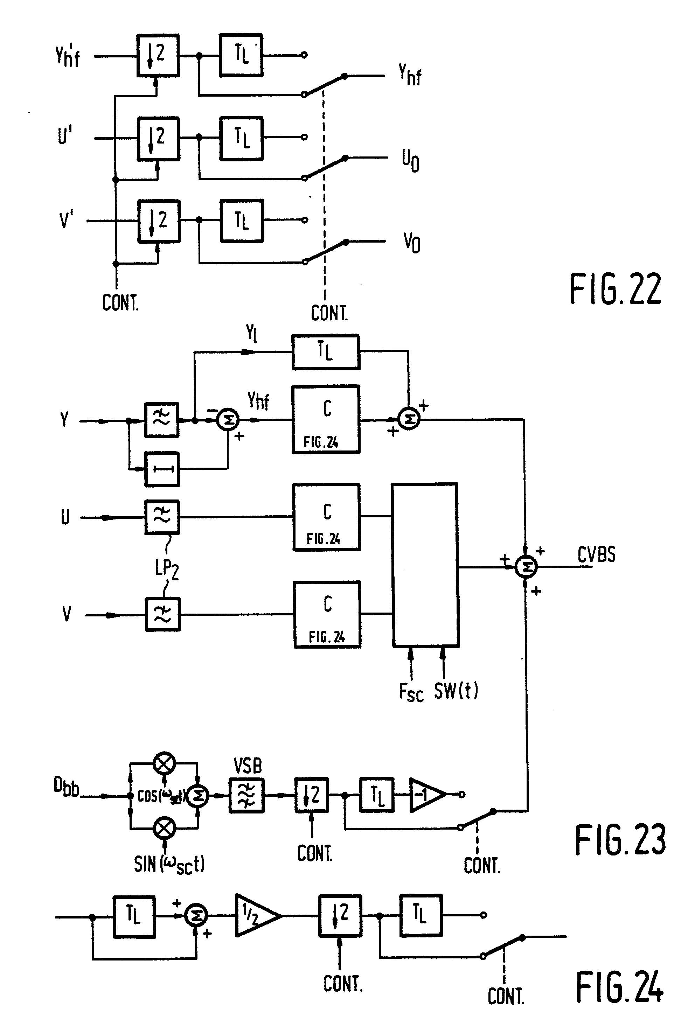

so that, even if Dbb(t+TI) were equal to -Dbb(t), D(t+TI) would not be equal to -D(t). Thus it must be ensured at the encoder end that the value of D at instant t0 is repeated with an opposite sign at instant t0+TI (see for example Fig. 23).

Assuming that the regenerated subcarrier has a phase error PHI, the quadrature demodultion of $S_3$ with SQRT(2).SIN(2.PI.Fsc.t-PI/4-PHI) and SQRT(2).COS(2.PI.Fsc.t-PI/4-PHI), respectively, results in

$$Dbb'(t) = LP1\{S_3(t).SQRT(2).SIN(2.PI.Fsc.t-PI/4-PRI)\}$$
$$= -SIN(PHI).LP1\{U(t) + SW(t)V(t)\} + COS(PHI).LP1\{Dbb(t)\}.SQRT(2) \quad (15')$$

and

$$S_5(t) = LP2\{S_3(t).SQRT(2).COS(2.PI.Fsc.t-PI/4-PHI)\}$$
$$= COS(PHI).LP2\{U(t) + SW(t)V(t)\} -SIN(PHI).LP2\{Dbb(t)\} .SQRT(2) \quad (16')$$

in which operator LP1{.} indicates a low-pass filter having a bandwidth which is equal to that of Dbb(t), and in which operator LP2{.} indicates a low-pass filter having a bandwidth which is equal to that of UV.

At this point (apart from the crosstalk as a result of the phase error PHI) Dbb has been regained. For regaining YUV the conventional method can be used, with a notch filter in a luminance path:

$$Yhf'(t) = NOTCH\{S_4(t)\} = NOTCH\{Yhf(t)\} + XL(t) \quad (17)$$

XL is the cross-luminance caused by U and V. On the other hand we find that

$$S_6(t) = LP2\{S_4(t).SQRT(2).SIN(.PI.Fsc.t-PI/4-PHI)\} = COS(PHI).LP2\{U(t)-SW(t)V(t)\} + XC(t) \quad (18')$$

in which XC is the cross-color caused by Yhf. Finally, U and V are regained in accordance with

$$U'(t) = [S_5(t) + S_6(t)]/2 \quad (19)$$
$$V'(t) = SW(t).[S_5(t)-S_6(t)]/2 \quad (20)$$

The more comples cross-color and cross-luminance elimination method M2 described as an alternative to the method M1, has no equivalent for the present variant. The remarks about the compatibility of the method M1 apply in unchanged form to the present variant. The description of the embodiments of the present aspect of the invention must be slightly adapted, as described below.

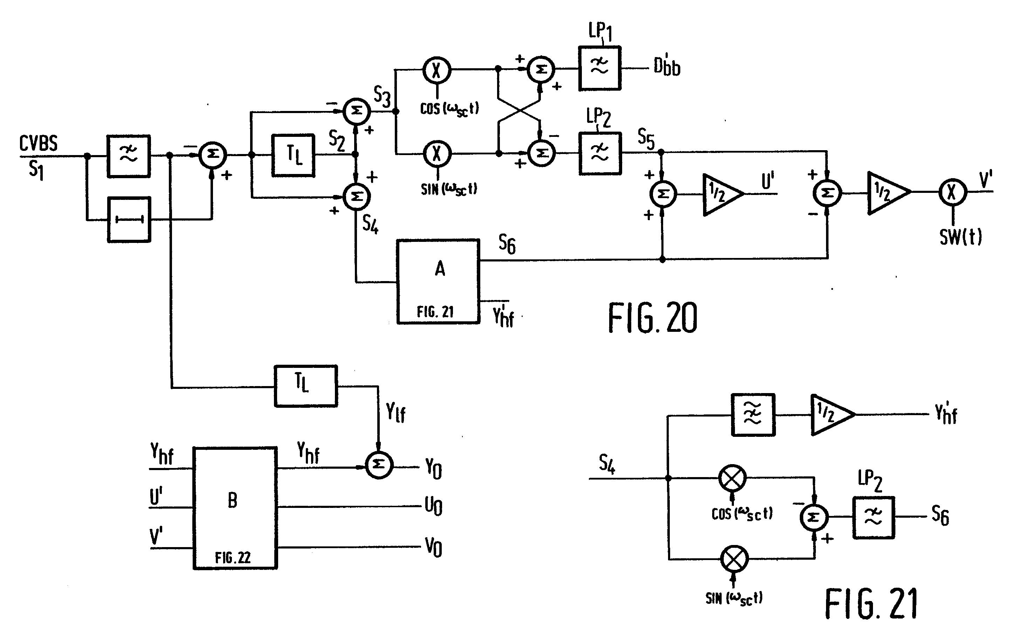

Fig. 20 shows a possible embodiment of the extended decoder according to the present aspect of the invention, in which the blocks denoted by "A" and "B" are specified in Figs. 21 and 22, respectively. Only the compensating delays which are evidently required are indicated. The time-variant filtering in the extended decoder comprises a decimating filter and an interpolating filter, which interpolating filter can be made as complex as is desirable. However, the simplest interpolators (so-called repeaters) are shown in Figs. 21 and 22. Fig. 23 shows a possible embodiment of the extended encoder, while the block denoted by "C" is further specified in Fig. 24. The time-variant filtering in the extended encoder also comprises an interpolating filter and a decimating filter, which decimating filter can be made as complex as desirable. However, the simplest decimator (so-called averager) is shown in Fig. 24. The control signals (CONT) are determined by an "arrangement" of the pair of 2 lines in the vertical-temporal domain as shown in Fig. 26; this arrangement essentially indicates the manner of sample rate increase and decrease. It will be obvious that these control signals should be synchronised with each other in the encoder and the decoder.

In the preceding paragraphs approximation in the form of COS(x + 2PI/625) = ~COS(x) are made in the derivation of the final formulas. If these approximations are not permissible, the same final formulas can still be obtained (however, without approximations) if the section of the encoder relating to U and V is arranged to be different, as is shown in Fig. 25 (the decoder remains the same). The standard decoder then has a fixed phase error of 2PI/625 (approximately 0.58 degrees) on the second line of the pair of two (n and n+1), which phase error is very acceptable.

Figs. 20-25 will not be described in detail, since they resemble Figs. 10-15 to a very large extent.

The above modification can be summarized as follows. By making chrominance and high frequency luminance always identical on two consecutive lines, room is created to transmit an additional signal which comprises identical information with reference to these two lines in a PAL TV signal theoretically having an ideal poosibility of separation. The advantage of this method is the absence of motion blur. The compatibility is maintained.

In the following part of the description, a second subchannel will be described which can be used to encode additional information into the picture information portion of a PAL TV signal.

The additional operations necessary to use this subchannel include the modulation of additional information on an extra subcarrier in the active video portion. The frequency of this extra subcarrier and its modulation are to be chosen in such a way that the picture generated by the standard receiver deteriorates to a minimum extent. This possibility of transmitting extra information can be utilised in different ways; an addition to the existing signal components (luminance and the two chrominance signals) by means of analog signals is feasible, or the transmission of arbitrary digital information as indicated hereinbefore.

T.M.M. Kremers and J.G. Raven (Neues aus der Technik, Nr. 4, 16.08.82, item 686, Kompatibles Fernsehübertragungsverfahren mit erhöhter Auflösung) have proposed to interleave high horizontal luminance frequency components in the active video portion by modulating these components on a second subcarrier whose frequency had to be equal to an odd multiple of half the line frequency. Such a frequency should lead to a minimum visibility on a standard PAL receiver. For practical considerations they chose this frequency in their system to be twice the standard PAL subcarrier frequency (it is true that this frequency is not exactly equal to an odd number of times of half the line frequency but it can be proved that this requirement is not entirely exact).

Fukinuki and others (Hitachi) (EP 0.120.390) have proposed for NTSC to interleave high luminance frequency components in the active video portion by modulating these components on a second subcarrier which is simply related to the standard NTSC barrier. This method is closely related to the Kremers and Raven method used for PAL. In literature the location in the 3D frequency spectrum in NTSC where this second subcarrier can be placed has since then come to be known as the "Fukinuki hole".

The David Sarnoff Research Center has utilised this "Fukinuki hole" in the ACTV system (compatible with NTSC) by quadrature modulating two signals on a second subcarrier, which signals have high horizontal luminance frequencies and originate from the central 4:3 section and from the "side panels" of a 5:3 system (the "side panels" of a 5:3 system should be considered as the horizontal enlargement of the picture width with respect to a 4:3 system).

When using such an extra modulate it is essential that an optimum possible separation is made between the existing Y/U/V signals and the extra modulate in the extended receiver. The perfection with which this should be done is greatly dependent on the type of modulate (i.e. AM, FM, PM, analog or digital) and on the information which is modulated on the extra subcarrier. It will be obvious that a good separation implies that measures should be taken at the extended encoder end as well as at the extended decoder end. If a digital modulate such as, for example 16-QAM is chosen (so that the information is generally uncorrelated with the main picture) it can simply be proved that only an insufficient separation can be realised with standard 3D filtering techniques (linear, time-invariant).

The present aspect of the invention is based on the recognition that the Kremers and Raven method (for PAL: 625 lines, 2:1 interlace and FL = 15625 Hz) can be generalised by (1) not limiting the extra information which is transmitted to high horizontal luminance frequencies, but by admitting arbitrary extra information (as stated in the introduction) and by (2) having the frequency of the second subcarrier defined by the formula

$$Fsc2 = (m + 1/2)^*FL + dn^*50 + dFt \quad [HZ]$$

in which
- m is an integer and m > = 0
- dn is an integer and $|dn| \ll 156$
- $|dFt| \ll 12.5$ Hz
- FL = 15625 Hz (the line frequency).

A frequency which is equal to twice the standard PAL subcarrier frequency (as used in Kremers and Raven's proposal) satisfies the formula for which it then holds that m = 567, dn = 1 and dFt = 0.

According to the present aspect of the invention, it is proposed to transmit a digital modulate in the high-frequency active video spectrum with reference to the above recognition and by means of linear time-variant filtering techniques so that the compatibility deteriorates to a minimum extent and an adequate separation can be realised between Yhf/U/V and D (the extra digital information) in the extended receiver. Only the separation of D and Yhf/U/V is given priority (not the separation of Yhf and U/V mutually), while the fact that the information is digital is not essential for this aspect of the invention, if considered separately from the framework of a transmission system in which digitized additional information is distributed over a plurality of subchannels.

The total active video signal can now be written as CVBS(t) = Ylf(t) + Yhf(t) + U(t)*SIN(2*PI*Fsc*t) + V(t)*SW(t)*COS(2*PI*Fsc*t) + Di(t)*COS(2*PI*Frk*t + PhiO) + Dq(t)*SIN(2*PI*Frk*t + PhiO] = Ylf(t) + Yhf(t) + C(t) + D(t)

The separation by means of time-variant filtering techniques is based on the phase relationship between the standard PAL subcarrier (Fsc) and the extra subcarrier (Frk) and on the phase properties of the extra subcarrier. In fact, there are two standard PAL subcarriers. The U subcarrier is defined as the carrier on which the U signal is modulated and the V subcarrier (on which the V signal is modulated) is defined as an infinite number of carriers with a decreasing amplitude produced by multiplying the U subcarrier (shifted 90° in phase) by a line alternating +/- 1.

The diagram below gives a survey of the phase (rounded off at 2 degrees) of the U and V subcarriers and of the extra subcarrier (it has been assumed that dn = dft = 0) on a number of lines at the same horizontal position.

N: = Line number in the 8-field PAL sequence
RK-subcarrier phase: = 360 *FRAC [(N-1)* (1/2)]
U-subcarrier phase : = 360 *FRAC [(N-1) (3/4 + 1/625)]
V-subcarrier phase : = U-subcarrier phase, N = odd, (U-subcarrier phase + 180) MOD 360, N = even
In the above formulae, the FRAC function takes the fractional part of its argument.

```
              0          180          0          180
      313 #  180   938 #  90   1563 #   0   2188 #  270
             180          270          0           90


              0          180          0          180
        1 #   0   626 #  270   1251 #  180  1876 #  90
              0           90          180          270


             180           0          180           0
      314 #   90   939 #    0   1564 #  270  2189 #  180
             270           0           90          180


             180           0          180           0
        2 #  270   627 #  180   1252 #   90  1877 #   0
             90           180          270           0


              0          180          0          180
      315 #   0   940 #  270   1565 #  180  2190 #  90
              0           90          180          270
```

It is now important to find an N number of instants so that, if the same Yhf/U/V/Di/Dq information is transmitted at these instants (possibly per component, for a part of these instants), due to the 180 degrees phase differences of the subcarriers at these instants, the extra (Di/Dq) information can be separated from the other (Yhf/U/V) information by taking a simple linear combination of the total information at these instants. Dependent on the implementation it may also be possible to separate U/V from Yhf by means of another linear combination of the information at these instants. A similar problem in NTSC and an associated solution is found in the ACTV system ("intra-frame averaging"). In order to transmit as much as possible extra information (of course at the expense of Yhf/U/V), N should be as small as possible.

Since the same Yhf/U/V information is to be present at N instants, the original Yhf/U/V information should be decimated by a factor of N and then repeated over the N instants. Fig. 27 shows the operations in the extended transmitter T and the extended receiver R for Yhf. The transmitter T includes a cascade of a decimating filter DT and an interpolating filter IT for each component. This interpolating filter IT is always the simplest, namely a so-called repeater. On the other hand the decimating filter DT can be chosen to be as complex as is desirable; however, the simplest decimator DT takes the average at the N instants.

In the extended receiver R the Yhf/U/V information is separated from the Di/Dq information by means of a decimating filter DR (a simple averager) whereafter an interpolating filter IR realises the original sampling structure again for Yhf/U/V. This interpolating filter IR can again be chosen to be as complex as is desirable; the simplest interpolator IR is a repeater.

The fact that a residue of aliasing is produced during decimation and a residue of additional repeating spectra remains during interpolation, which may give rise to artefacts, is inherent in decimation and interpolation by means of practical filters. These artefacts relating to the standard receiver are determined by the decimator DT as well as the interpolator IT in the transmitter T, while the artefacts relating to the extended receiver R are determined by the decimator DT in the transmitter T and the interpolator IR in the extended receiver R.

Two possibilities follow fairly directly from the above mentioned phase diagram, namely:

(i) "4-2 Fields" method:

- the same Di/Dq information on lines n, n + 1, n + 312, n + 313,
- the same Yhf information on lines n, n + 1, n + 312, n + 313,
- the same U/V information on lines n, n + 312,

in which "n" is a given line number. This block of 4 lines can be repeated in different ways in the vertical-temporal field. This is shown in the diagrams below in which

```
                              o

                              +

                              o

                              o
```

represents the basic block of 4 lines.

```
        o     o     o       o     o     o       o     o     +
      +     +     +       +     o     +       +     o     o
        o     o     o       o     o     o       o     +     o     ˄
        o     o     o   ,   o     +     o   ,   o     o     o    |vertical
          o     o     o       o     o     o       +     o     o  |(line)
      +     +     +       +     o     +       o     o     +      |position
        o     o     o   ,   o     o     o       o     o     o
      o     o     o       o     +     o       o     +     o
```

                    ---> time

The artefacts which are generated are dependent on this pattern in a different way. The block of 2 lines for U/V is found by replacing the basic block in the above-mentioned diagrams by

```
                              o

                              +

                              o

                              +
```

20

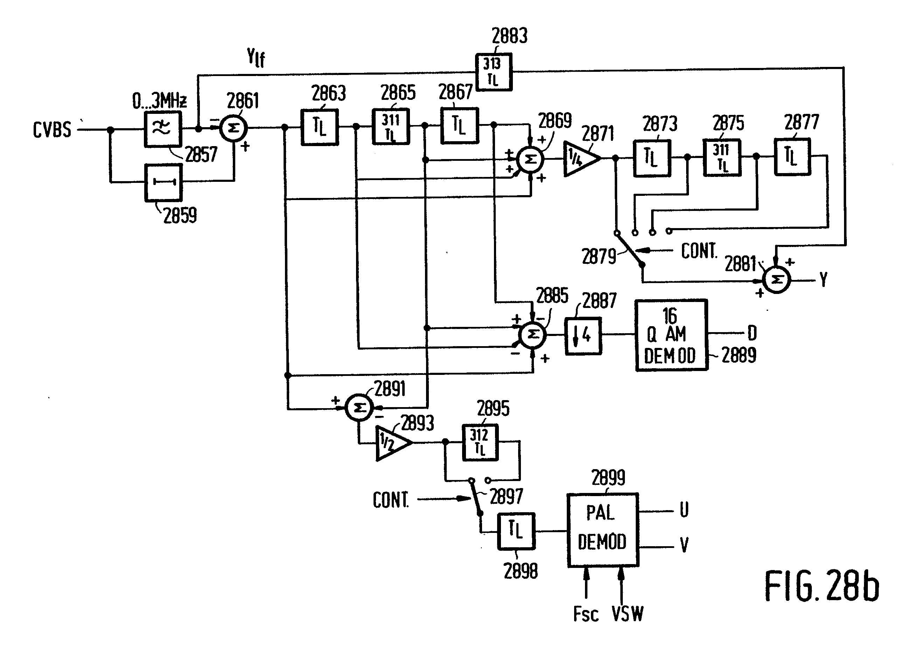

Figs. 28a and 28b show a possible implementation of the extended encoder and decoder, respectively, when using this method in which the decimator in the encoder and the interpolator in the decoder are the simplest versions.

(ii) 4-3 Fields method:
- the same Di/Dq information on lines n, n+312, n+313, n+625,
- the same Yhf information on lines n, n+312, n+313, n+625
- the same U/V information on lines n, n+312,

in which "n" is a given line number. This block of 4 lines can be repeated in different ways in the vertical-temporal field. This is shown in the diagrams below in which

```
        o
    +   o
        o
```

represents the basic block of 4 lines.

```
    o   o   o           o   o   o       o   o   o   o
+   o   +   o       o   +   o   o       +   o   +
    o   o   o           o   o   +       o   o   o   o  .
o   +   o   +       +   o   o   o       o   +   o   |vertical
    o   o   o   ,       o   +   o   ,   +   o   o   o |(line)  +
+   o   +   o       o   o   o   +       o   o   +     |position
    o   o   o           +   o   o       o   +   o   o
o   +   o   +       o   o   +   o       o   o   o
    o   o   o           o   o   o       o   o   +   o
```

```
---> time
```

The artefacts which are generated are different in dependence on this pattern. The block of 2 lines for U/V is found by replacing the basic block in the diagrams shown above by

```
        o
    +   o
    +
```

The drawbacks of the 4-3 Fields and 4-2 Fields methods are:
- the Yhf information must be decimated by a factor of 4. This will blur moving components having high diagonal frequencies. Moreover, there will be very strong aliasing.
- the quantity of data which can be transmitted is reduced by a factor of 4, compared with the situation in which one would not have to bother about a separation between Yhf/U/V and Di/Dq.

The advantage of these two methods is that a perfect separation is possible between Yhf and U/V. If the drawbacks outweigh the advantage, the question should be asked whether it is possible to separate Di/Dq from Yhf/U/V in a method which is similar to the above-mentioned methods, this time, however, by finding only TWO instants at which the subcarriers have the correct phase relationship. Moreover, these two instants should be as "close" as possible to each other in the 3D domain so as not to reduce the bandwidth of Yhf/U/V to a too strong extent (decimating and interpolating filters).

It appears to be possible to find such instants if we do not confine ourselves to instants having the same horizontal position. Since the "Yhf carrier" always has the same "phase", the U subcarrier and the V subcarrier will also have to have the same phase in relation to these two instants. The most optimum instants in this connection are those at:

(a) $t = t0$ and $t = t0 + 88531 \cdot Tsc$ ($88531 \cdot Tsc = \sim 312 \cdot Tl + Tsc/2$)

(b) $t = t0$ and $t = t0 + 88530 \cdot Tsc$ ($88530 \cdot Tsc = \sim 312 \cdot Tl - Tsc/2$) For the high-frequency components of CVBS(t) we can write:

CVBShf(t) = Yhf(t) + C(t) + D(t)

After decimation and interpolation of Yhf/U/V in relation to the two above-mentioned instants it then holds that:

CVBShf($t + q \cdot Tsc$) = Yhf(t) + C(t) + D($t + q \cdot Tsc$)

To be able to separate D(t) in a simple manner from Yhf + C, it must hold that D($t + q \cdot Tsc$) = -D(t) (the separation is realised by simple addition and subtraction of the information at the two instants). If the baseband information of D(t) (hence Di/Dq) is the same at the two instants, the RK subcarrier at these two instants should have a phase difference of 180 degrees. The following searching problem is then found by means of the general equation of the RK subcarrier:

$360 \cdot (Frk \cdot q \cdot Tsc) = (2 \cdot p + 1)180$, such that Frk = $\sim$F0

in which

- q is equal to 88530 or 88531
- p is an integer and
- F0 is the frequency at which the RK subcarrier should approximately be situated.

Rewriting leads to

$(2 \cdot p + 1) \cdot Fsc/(2 \cdot q) = (m + 0.5)Fl + dn \cdot 50 + dFt = \sim F0$

for which solutions are found to be possible, though not with dn = dft = 0.

The pairs of two instants can now be ordered in different manners in the vertical-temporal field as is shown in the diagram below in which

```
                                        o

                                        +
```

represents the basic pair.

```
        o     o     o           o     +     o           o     o     +



      +     +     +           +     o     +           +     +     o
         o     o     o           +     o     +           o     +     +   ^
      +     +     +           o     +     o           +     o     o  |vertical
         o     o     o           o     +     o           +     +     o |(line)
      +     +     +           +     o     +           o     o     +  |position
         o     o     o           +     o     +           +     o     o |etc.
      +     +     +           o     +     o           o     +     +
```

```
                    ---> time (fields)
```

The artefacts which are generated are again dependent on this pattern in a different manner.

However, this method ("2-312TL") has 2 drawbacks:

(i) With a line-locked clock the two instants are not just available so that a choice must be made between the transition to a subcarrier-locked clock on the one hand and the approximation of the required rest delays of a fraction of a sampling period with a filter (for example a non-symmetrical transversal filter) on the other hand.

(ii) If the Yhf signal were decimated without any measures this would mean for purely horizontal frequencies a $|COS(PI \cdot Fh/(2 \cdot Fsc))|$ amplitude transfer function, which would lead to an inadmissible limitation of luminance resolution, both for the compatible and for the extended receiver.

The first drawback is inherent in the method found, while the second drawback can be entirely or partly eliminated by having the decimating filter average the values of Yhf at instants t0 and t0 + q*Tsc + /-Td (0<Td<Tsc/2) while the interpolating filter (the repeater) repeats this average at instant t0 + q*Tsc. An inverse operation is then to be performed in the extended receiver. However, a horizontal 25 Hz jitter which is larger as Td is larger, is then present in the compatible receiver at high horizontal luminance frequency components. On the other hand, with an increasing Td a larger luminance bandwidth is obtained so that a compromise must be found between horizontal luminance bandwidth and compatibility (extent of horizontal jitter).

Since Td can generally neither be realised with unity delays of a line-locked clock nor with unity delays of a subcarrier locked clock, this delay will in any case have to be approximated by means of a filter (for example, a non-symmetrical transversal filter).

In the case of implementation of a line-locked clock the interpolating filter (the "repeater") will not be able to perfectly repeat the value of Yhf at t = t0 at t = t0 + q*Tsc due to the fact that this instant is not directly available so that an interpolation must be performed in the horizontal direction, resulting in an amplitude characteristic curve which is not straight. Without any measures this would not lead to the same value at instant t0 + q*Tsc as at instant t0 so that a residue of Yhf remains in Di/Dq at the instant when the values at the two instants are subtracted from each other in the extended receiver so as to determine Di/Dq.

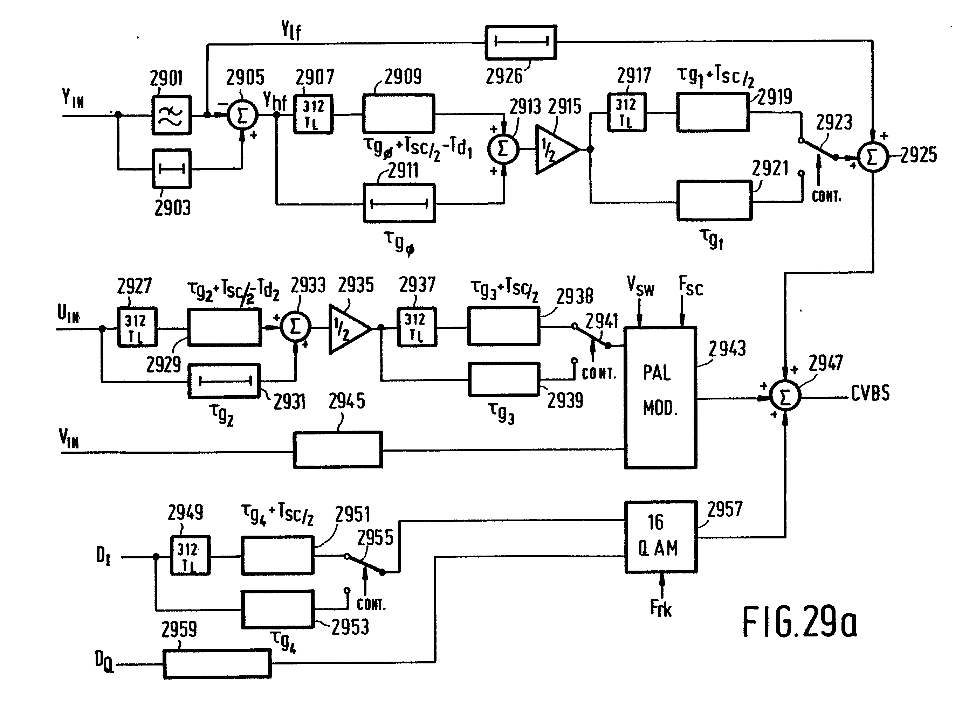

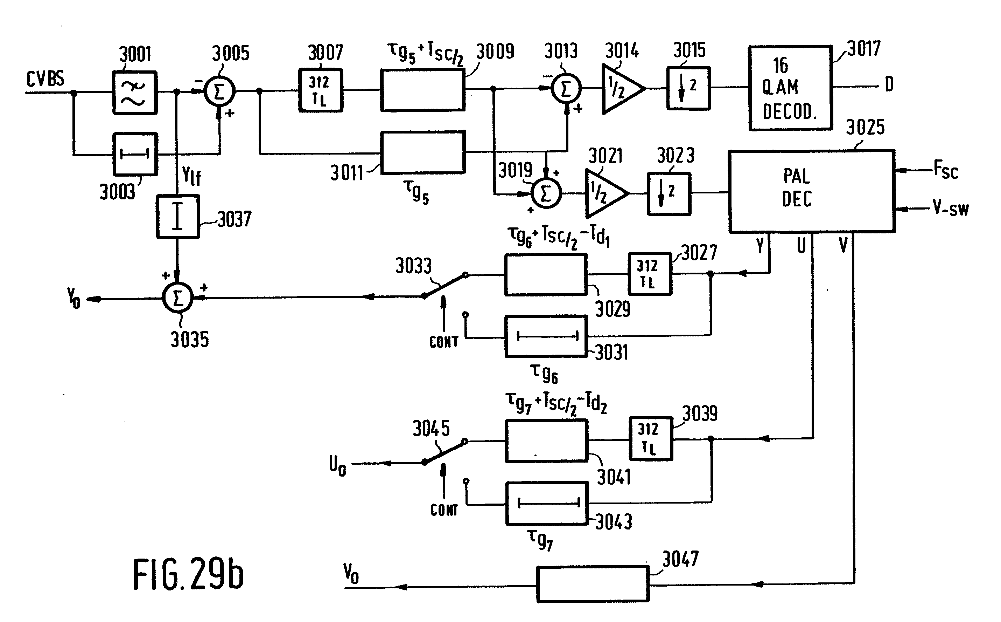

If this crosstalk is unacceptable, it is thus necessary to compensate the amplitude characteristic curve of the instant t = t0 + q*Tsc for instant t = t0. Such a compensation of an amplitude characteristic curve must also be found for U/V. The same problem occurs in the extended receiver if it is line-locked. Figs. 29a and 29b show a total system implementation in the case of a line locked clock for the extended transmitter and the extended receiver, respectively. In these Figures, q has been chosen to be 88531.

To sum up the above-described second subchannel employing techniques, a preferably digital modulate is transmitted (with extra information) in the high-frequency active video portion of a PAL television signal, the carrier of said modulate being place in such a part of the three-dimensional spectrum that the visibility of this extra modulate in a conventional receiver is minimal. For a receiver according to the invention a satisfactory separation between this extra information and the ordinary color picture information is achieved by means of time-variant filtering.

Figs. 28a and 28b show possible implementations of an extended encoder and an extended decoder, respectively, in which the "4-2 Fields" method is put into effect. In Fig. 28a, an input luminance signal Yin is applied to a band-splitter filter having a low-pass filter 2801 for supplying a low-frequency luminance signal Ylf, compensating delay 2803 and a subtractor 2805 for subtracting output signals of the filter 2801 and the delay 2803 to obtain a high-frequency luminance signal Yhf. The signal Yhf is applied to an averager having a series arrangement of a first line delay 2807, a field delay 2809, and a second line delay 2811, followed by an adder 2813 and a devide-by-four circuit 2815. The adder adds the input of the delay 2807 and the outputs of the delays 2807, 2809 and 2811. This averager corresponds to decimator DT shown in Fig. 27, N being 4. The output signal of the divider 2815 is applied to a repeater (IT of Fig. 27) having a series arrangement of a line delay 2817, a field delay 2819 and a second line delay 2821, followed by a switch 2823 selecting the input of delay 2817 or one of the outputs of delays 2817, 2819 or 2821. Adder 2815 adds the output of switch 2823, which is the time-variant filtered high-frequency luminance signal, to the low-frequency luminance signal which has been delayed by a compensating field delay 2827.

Input chrominance signals Uin/Vin are applies to respective averagers having field delays 2829 U/V, adders 2831 U/V of the inputs and the outputs of the respective field delays 2829 U/V, and halving circuits 2833 U/V. The averagers correspond to decimator DT of Fig. 27, N being 2. The outputs of halving circuits 2833 U/V are applied to repeaters (IT of Fig. 27) having field delays 2835 U/V and switches 2837 U/V switching between the inputs and outputs of the respective field delays 2835 U/V. Outputs of the switches 2837 U/V are applied to respective inputs of a PAL modulator 2839, which also receives a subcarrier signal (frequency Fsc) and a V-switch signal V-sw. An output of the modulator 2839 is coupled via compensating delay 2841 and line delay 2843 to an adder 2845, which also receives an output signal of the adder 2825.

The additional signal D, which may be an analog signal but is preferably a digital signal, is applied to a series arrangement of a line delay 2847, a field delay 2849 and a line delay 2851, followed by a switch 2835. Delays 2847-2851 and switch 2835 together correspond to repeater IT of Fig. 27. The output of switch 2853 is applied via a digital modulator 2855 to a third input of the adder 2845, which supplies a video signal CVBS being encoded according to the present aspect of the invention.

In the extended decoder shown in Fig. 28b, the transmitted video signal CVBS is applied to a band-splitter filter having a low-pass filter 2857 for supplying a low-frequency luminance signal Ylf, a compensating delay 2859, and a subtractor 2861 for subtracting output signals of the filter 2857 and the delay 2859 to obtain a high-frequency portion of the video signal including high-frequency luminance, chrominance and the additional signal D. The high frequency portion of the video signal is applied to a series arrangement of a line delay 2863, a field delay 2365 and a line delay 2867. An adder 2867 adds the input signal of delay 2863 to the output signals of delays 2863-2867. A divider 2871 divides the output signal of adder 2869 by 4. Delays 2863-2867, adder 2869 and divider 2871 together form decimator DR of Fig. 27, N being 4. The output of divider 2871 is coupled to an interpolator (IR of Fig. 27) comprising a series arrangement of a line delay 2873, a field delay 2875 and a line delay 2877, followed by a switch 2879 for selecting the input signal of delay 2873 or one of the output signals of delays 2873-2877 to obtain the decoded high-frequency luminance signal. An adder 2881 adds the low-frequency luminance signal Ylf, which has been delayed by compensating field delay 2883, and this decoded high-frequency luminance signal to obtain to obtain the decoded luminance signal Y.

An adder 2885 has a positive input coupled to the input of line delay 2863, a negative input coupled to the output of line delay 2863, a positive input coupled to the output of field delay 2865 and a negative input coupled to the outputof line delay 2867. An output of the adder 2885 is coupled via a sample rate decrease circuit 2887 to a digital demodulator 2889 for retrieving the additional signal D.

A subtractor 2891 subtracts the output signal of field delay 2865 from the input signal of line delay 2863. The output of the subtractor 2891 is coupled via a halving circuit 2893 to a repeater having a field delay 2895 and a switch 2897 for selecting the input or the output of field delay 2895. The output of the switch 2897 is coupled via a line delay 2898 to a PAL color demodulator 2899 for retrieving the chrominance signals U and V. The demodulator 2899 also receives a subcarrier signal (frequency Fsc) and a V-switch signal V-sw.

Figs. 29a and 29b show possible implementations of an extended encoder and an extended decoder, respectively, in which the "2-312TI" method is put into effect while using a line-locked clock. In Fig. 29a, an input luminance signal is applied to a band splitter filter having a low-pass filter 2901 for supplying a low-frequency luminance signal Ylf, a compensating delay 2903, and a subtractor 2905 for subtracting output signals of the filter 2981 and the delay 2903 to obtain a high-frequency luminance signal Yhf. The signal Yhf is applied via a field delay 2907 to a horizontal filter 2909 which approximates the delay $Tg0 + Tsc/2 - Td1$. The signal Yhf is also applied to a delay 2911 having the delay Tg0. An adder 2913 and a halving circuit 2915 average output signals of the filter 2909 and the delay 2911. The circuit elements 2907-2915 correspond to the decimator DT of Fig. 27, N being 2. The output of the decimator is coupled via a field delay 2917 to a horizontal filter having a group delay period $Tg1 + Tsc/2$, and directly to a horizontal filter 2921 having a group delay period Tg1. A switch 2923 selects the output of filter 2919 or the output of filter 2921. The circuit elements 2917-2923 correspond to the interpolator IT of Fig. 27 which supplies the encoded high frequency luminance signal. An output of switch 2923 is coupled to an input of adder 2925 which further receives the low frequency luminance signal Ylf via a compensating delay 2926.

The input chrominance signal Uin is applied to a decimator comprising a first branch including a field delay 2927 and a horizontal filter having a group delay period $Tg2 + Tsc/2 - Td2$, a second branch having a delay 2931 (delay Tg2), an adder 2933 adding outputs of the two branches and a halving circuit 2935 which supplies the decimated U signal. This decimated U signal is applied to an interpolator comprising a first branch including a field delay 2937 and a horizontal filter 2938 having a group delay period $Tg3 + Tsc/2$, a second branch having a delay 2939 (delay Tg3), and a switch 2941 for selecting the output of the first or the second branch and for supplying the encoded U signal to a PAL modulator 2943.

The input chrominance signal Vin is applied via a circuit 2945, which includes elements corresponding to the elements 2937-2941, to another input of the PAL modulator 2943, which further receives a V-switch signal V-sw and a subcarrier signal having a frequency Fsc. An output of the PAL modulator 2943 supplies the modulated chrominance signal to an adder 2947, which also receives the encoded luminance signal from the adder 2925.

Since a separate subcarrier is used to carry the additional signal D, the signal D is first split into two parts $D_I$ and $D_Q$ which are modulated in quadrature onto the separate subcarrier having the frequency Frk. The signal $D_I$ is applied to an interpolator comprising a first branch including a field delay 2949 and a horizontal fiter 2951 having a group delay period $Tg4 + Tsc/2$, a second branch including a horizontal filter 2953 having a group delay Tg4, and a switch 2955 selecting the output of the first or the second branch. An output of this interpolator is coupled to a first input of a digital modulator 2957. The signal $D_Q$ is applied via a circuit 2959, which comprises elements corresponding to the elements 2949-2955, to a second input of the modulator 2957. An output of the modulator 2957 is coupled to a third input of the adder 2947 whose output supplies the video signal CVBS which is encoded according to the present aspect of the invention.

It is to be noted that the filter 2919 and 2921 have the same amplitude characteristic, which remark also applies within each pair of filter 2938/2939 and 2951/2953.

Fig. 29b shows a decoder corresponding to the encoder of Fig. 29a. The transmitted video signal CVBS is applied to a band splitter filter having a low-pass filter 3001 for obtaining a low-frequency luminance signal Ylf, a compensating delay 3003, and a subtractor 3005 for subtracting output signals of the filter 3001 and the delay 3003 to obtain a high frequency portion of the encoded video signal. This high-frequency portion is applied via a field delay 3007 to a horizontal filter 3009 having a group delay Tg5 + Tsc/2, and directly to a horizontal filter 3011 having a group delay Tg5 and the same amplitude characteristic as the filter 3009. A subtractor 3013 subtracts output signals of the filters 3009 and 3011, respectively. An output of the subtractor 3013 is coupled via a halving circuit 3014 and a sample rate decreasing circuit 3015 to a digital demodulator 3017 for obtaining a decoded additional signal D.

An adder 3019 adds the output signals of the filters 3009 and 3011, respectively. An output of the adder 3019 is coupled via a halving circuit 3021 and a sample rate decreasing circuit 3023, to a conventional PAL decoder 3025, which also receives a subcarrier signal (frequency Fsc) and a V-switch signal V-sw. The circuit elements 3007-3011 and 3019-3023 correspond to the decimator DR of Fig. 27, N being 2.

A Y-output of the PAL decoder 3025 is coupled to an interpolator (IR of Fig. 27) comprising a first branch including a field delay 3027 and a horizontal filter 3029 having a group delay Tg6 + Tsc/2 - Td1, and a second branch including a delay circuit 3031 having a delay period Tg6. A switch 3033 selects the output signal of the first branch or of the second branch. An output of the switch 3033 supplies the decoded high-frequency luminance signal and is coupled to an adder 3035 which also receives the low-frequency luminance signal, via a compensating delay 3037. The adder 3035 supplies the output luminance signal YO.

A U-output of the PAL decoder 3025 is coupled to an interpolator comprising a first branch including a field delay 3039 and a horizontal filter 3041 having a group delay Tg7 + Tsc/2 - Td2, and a second branch including a delay circuit 3043 having a delay period Tg7. A switch selects the output signal of the filter 3041 or of the delay 3043, and supplies the output chrominance signal U0.

A V-output of the PAL decoder 3025 is coupled to a circuit 3047 which includes circuit elements corresponding to the elements 3039-3045 and which supplies the output chrominance signal VO.

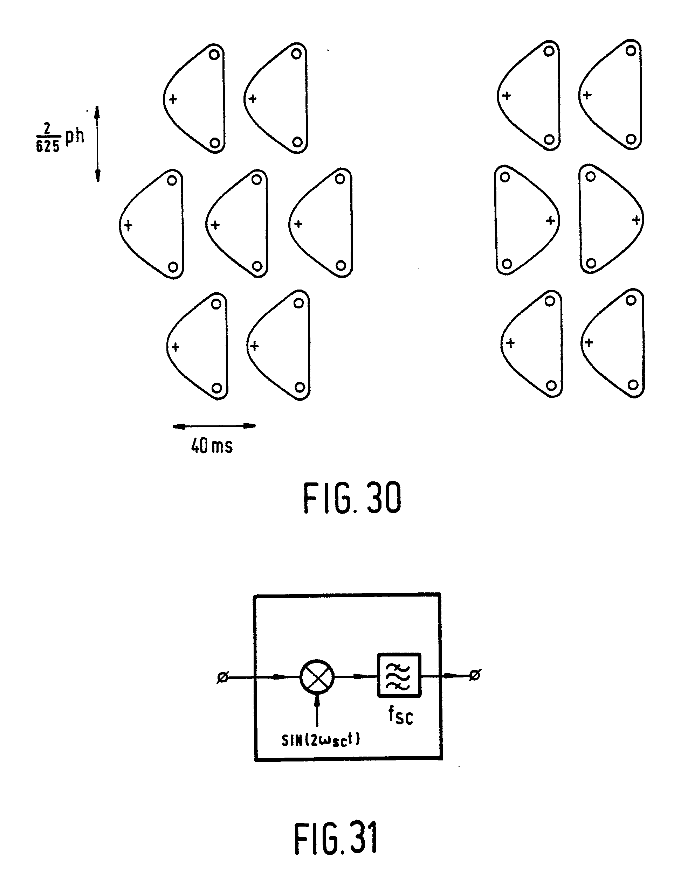

The following method is based on the equality of Yhf/U/V/Di/Dq at three instants which again have the same horizontal position. This block of three instants can be repeated in the vertical-temporal field in two different manners as shown in Fig. 30. The frequency of the extra subcarrier can again be freely chosen; in the following part of the description it is assumed that the frequency of this extra subcarrier is an odd multiple of half the line frequency. Considering the first possibility shown in Fig. 30, the three instants are always at lines n, n+1 and n+313. For the high-frequency CVBS signal it then holds for these three lines (after decimation and interpolation of Yhf/U/V/Di/Dq):

$$\text{CVBS(n)} = \tag{34}$$
$$\text{Yhf} + \text{U*SIN(x)} \quad + \text{V*COS(x)} \quad + \text{Di*COS(y)} + \text{Dq*SIN(y)}$$
$$\text{CVBS(n+1)} = \tag{35}$$
$$\text{Yhf} + \text{U*SIN(x+270+e)} \quad - \text{V*COS(x+270+e)} \quad - \text{Di*COS(y)} - \text{Dq*SIN(y)}$$
$$\text{CVBS(n+313)} = \tag{36}$$
$$\text{Yhf} + \text{U*SIN(x+90+e/2)} - \text{V*COS(x+90+e/2)} - \text{Di*COS(y)} -$$

Dq*SIN(y) where e = 360/625. From this it follows that

$$\text{(CVBS(n+313) - CVBS(n+1))/2} = \text{(U*SIN(x+90+3e/4)-V*COS(x+90+3e/4) )*COS(e/4)} \tag{37}$$

from which theoretically U and V can be extracted, and after remodulation of U and V and subtraction of CVBS(n) the following two equations remain:

$$\text{CVBS(n) - REMODULATION(U,V)} = \text{Yhf} + \text{Di*COS(y)} + \text{Dq*SIN(y)} \tag{38}$$
$$\text{(CVBS(n+313) + CVBS(n+1))/2} = \text{Yhf} - \text{Di*COS(y)} - \text{Dq*SIN(y).} \tag{39}$$

Yhf can simply be separated from Di/Dq. For demodulation of U and V the generated subcarrier of line n+313 can be used in a very good approximation. Then there is only an (additional) phase error of 360/1250 = 0.29 degrees, which is negligible. Moreover, it holds that COS(e/4) = 0.9999874 and can thus also be very well approximated by 1. These approximations need not be performed if the PAL subcarrier is modified to

$$\text{Fsc\_new} := \text{(283.75 + 1/624)Fl} = \text{Fsc\_old} + 0.041 \text{ Hz} \tag{40}$$

which is within the specifications of the standard. In this case it holds that

$$\text{CVBS(n+1)} = \text{Yhf} + \text{U*SIN(x+270+e')} - \text{V*COS(x+270+e')} - \text{Di*COS(y)} - \text{Dq*SIN(y)} \tag{41}$$

$CVBS(n+313) = Yhf + U^*SIN(x+90+e') - V^*COS(x+90+e') - Di^*COS(y) - Dq^*SIN(y)$     (42)

in which $e' = 360/624$. It has hitherto been assumed that the PAL subcarrier phase can be perfectly regenerated. However, this is not the case in practice so that after demodulation of U/V and remodulation of U/V (in a different phase and with a different V switch sign) and subtraction of CVBS(n), a residue of U/V remains which leads to a poorer signal to noise ratio of Di/Dq. This is a drawback of this method.

Another drawback is the fact that the chrominance information is not exactly transmitted in a double sideband but partly in a single sideband. This means that quadrature distortion in U/V is produced after demodulation and of course also after remodulation so that a fairly large residue of U/V due to this quadrature distortion remains. If this residue is too large, either the chrominance information will have to be transmitted exactly in a double sideband (which limits the horizontal bandwidth) or the data will have to be transmitted in that part of the horizontal spectrum in which U/V is transmitted in a double sideband (which greatly reduces the admissible data bit rate) . This is another drawback of this method.

An advantage is that a separation between Yhf and U/V is possible with the above-mentioned restrictions.

Two improved variants of this method are described below. The advantage of these variants is that chrominance need no longer be limited to a real double sideband signal, which causes a larger horizontal chrominance resolution, while the maximum transmission capacity of the additional signal D is maintained. This variant has also the advantage that cross-color and cross-luminance for an extended decoder are eliminated.

This first variant of data reduction factor 3 relates to the same possibilities for configurations of the blocks of 3 positions in the vertical-temporal domain, where Yhf/U/V/D-information is identical, as has been described with reference to Fig. 30. The frequency of the extra subcarrier can also be freely chosen in this case, while only the phase relations in the block of 3 positions are important.

If Yhf, U and V are processed in such a way that this information is identical at the 3 considered time moments, we find with the aid of the expression of the PAL subcarrier frequency and the periodicity of the V-switch:

$S_2(t) = Yhf(t) + D(t) + U(t)SIN(2.PI.Fsc.t) + V(t)SW(t)COS(2.PI.Fsc.t)$     (43)

$S_2(t+TI) = Yhf(t) + D(t+TI) -U(t)COS(2.PI.Fsc.t+e) -V(t)SW(t)SIN(2.PI.Fsc.t+e)$     (44)

$S_2(t+313TI) = Yhf(t) + D(t+313TI) + U(t)COS(2.PI.Fsc.t+e/2) + V(t)SW(t)SIN(2.PI.Fsc.t+e/2)$     (45)

in which $e=2.PI/625$. This (small) phase error can be completely eliminated by giving the PAL subcarrier at the encoder end line alternating small phase jumps in the correct order (this can be easily implemented by means of delays); the following description is based thereon. This of course has the result that the standard decoder will now become a little more sensitive to phase errors.

If we assume that $D(t+TI) = D(t+313TI) = D(t)$, we easily find that

$S_3(t) = [S_2(t+313TI)-S_2(t+TI)]/2 = = U(t)COS(2.PI.Fsc.t) + V(t)SW(t)SIN(2.PI.Fsc.t)$     (46)

from which U and V can be perfectly regained by means of a standard PAL color demodulator. However, there is no PAL delay line which compensates phase errors in the generated chrominance subcarrier so that these will continue to give rise to color errors. This can be compensated by means of the measure line technique described with reference to Figs. 16 through 19. This problem does not exist for the standard decoder.

If subsequently $S_3$ is processed by a so-called "PAL modifier" as is shown in Fig. 31, we find:

$S_4(t) = BP\{2.S_3(t).SIN(4.PI.Fsc.t+2.PHI)\} = U(t)SIN(2.PI.Fsc.t+2.PHI) + V(t)SW(t)COS(2.PI.Fsc.t+2.PHI)$     (47)

in which BP{} represents a bandpass filter around the PAL subcarrier frequency. Subsequently we find:

$S_5(t) = S_2(t) - S_4(t) = Yhf(t) + D(t) + 2.SIN(PHI).\{U(t)COS(2.PI.Fsc.t.) + V(t)SW(t)SIN(2.PI.Fsc.t)\}$     (48)

We can also find:

$S_6(t) = S_2(t+TI) + S_2(t+313TI) = = Yhf(t) - D(t)$     (49)

Subsequently Yhf can be separated from D by means of:

$Yhf'(t) = [S_5(t)+S_6(t)]/2 = ~Yhf(t)$     (50)

$D'(t) = [S_5(t)-S_6(t)]/2 = = D(t) + SIN(PHI).\{U(t)COS(2.PI.Fsc.t) + V(t)SW(t)SIN(2.PI.Fsc.(t)\}$     (51)

at which thus a crosstalk occurs from U/V to D, dependent on the phase error of the generated chrominance subcarrier. Dependent on the amplitude of D(t) this may be acceptable or just unacceptable. In the latter case the same measure line compensation can be used again.

Fig. 31 shows a so-called PAL-modifier, which comprises a series arrangement of a modulator at twice the PAL subcarrier frequency and a bandpass filter which passes a frequency band around the PAL subcarrier frequency.

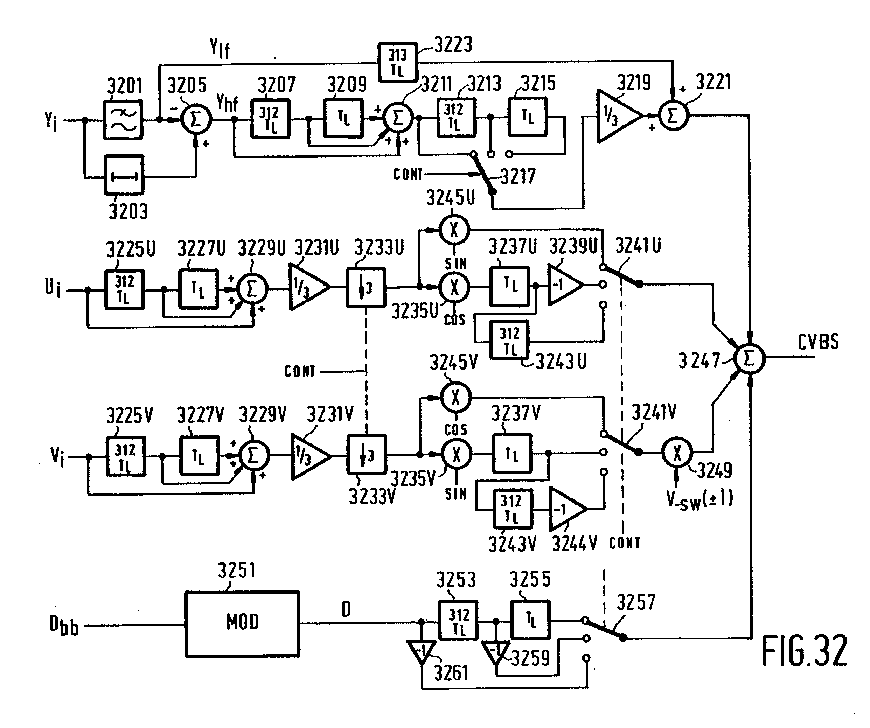

Fig. 32 shows an extended encoder according to the first variant of the method wherein Yhf/U/V/Di/Dq are made equal at three instants having the same horizontal position. The input luminance signal Yi is again applied to a band splitter filter comprise a low-pass filter 3201 for obtaining a low-frequency luminance signal, Ylf, a compensating delay 3203, and a subtractor 3205 for subtracting output signals of the filter 3201 and the delay 3203 to obtain a high- frequency luminance signal Yhf. The Yhf signal is applied to a decimator (DT in Fig. 27, N = 3) comprising a series arrangement of a field memory 3207 and a line memory 3209, and an adder 3211 for adding the input signal of the field memory 3207 to the input and the output signals of the line memory 3209. The decimated Yhf signal is applied to an interpolator (IT in Fig. 27, N = 3) comprising a series arrangement of a field memory 3213 and a line memory 3215, and a switch 3217 selecting the input signal of the field memory 2313, the input signal of the line memory 3215 or the output signal of the line memory 3215.

The output signal of the switch 3217 is coupled via a divide-by-three circuit 3219 to an adder 3221 which also receives the low frequency luminance signal Ylf from a compensating field delay 3223, and supplies an encoded luminance signal.

The input chrominance signals Ui/Vi are applied to a decimator comprising a series arrangement of a field memory 3225 U/V and a line memory 3227 U/V, and an adder 3229 U/V for adding the input signal of the field memory 3225 U/V to the input and the output signals of the line memory 3227 U/V. The adder output signal is divided by three by a divider 3231 U/V. A sample rate decreasing circuit 3233 U/V decreases the sample rate of the divider output signal by three.

The decimated U/V signals are subsequently applied to circuits which can be considered as combinations of the interpolator part of the time variant filter and the color modulator.

The decimated U signal at the output of the sample rate decreasing circuit 3233 U is applied to a series arrangement of a modulator 3235 U (COS-phase), a line memory 3237 U and an inverter 3239 U, whose output is coupled to a first switching contact of a switch 3241 U. An output of the line memory 3237 U is coupled via a field memory 3243 U to a second switching contact of the switch 3241 U. The decimated U signal is further applied via a modulator 3245 U (SIN-phase) to a third switching contact of the switch 3241 U. The output of the switch 3241 U is coupled to an adder 3247, which also receives the encoded luminance signal from the adder 3221.

The decimated V signal at the output of the sample rate decreasing circuit 3233 V is applied to a series arrangement of a modulator 3235 V (SIN-phase) and a line memory 3237 V. The output of the line memory 3237 V is coupled to a first switching contact of a switch 3241 V, and via a series arrangement of a field memory 3243 V and an inverter 3244 V to a second switching contact of the switch 3241 V. The decimated V signal is further applied via a modulator 3245 V (COS-phase) to a third switching contact of the switch 3241 V, whose output is coupled, via a multiplier·3249 multiplying by the V-switch signal V-sw, to the adder 3247.

The last signal, which has to be encoded into the video signal CVBS at the output of the adder 3247, is the baseband additional signal Dbb. The signal Dbb is applied to a modulator 3251 to obtain the signal D. The signal D is applied to an interpolator comprising a series arrangement of a field memory 3253 and a line memory 3255 whose output is coupled to a first switching contact of a switch 3257, an inverter 3259 which couples the output of the field memory 3253 to a second switching contact of the switch 3257, and finally an inverter 3261 which couples the input of the field memory 3253 to a third switching contact of the switch 3257. An output of the switch 3257 is coupled to the adder 3247.

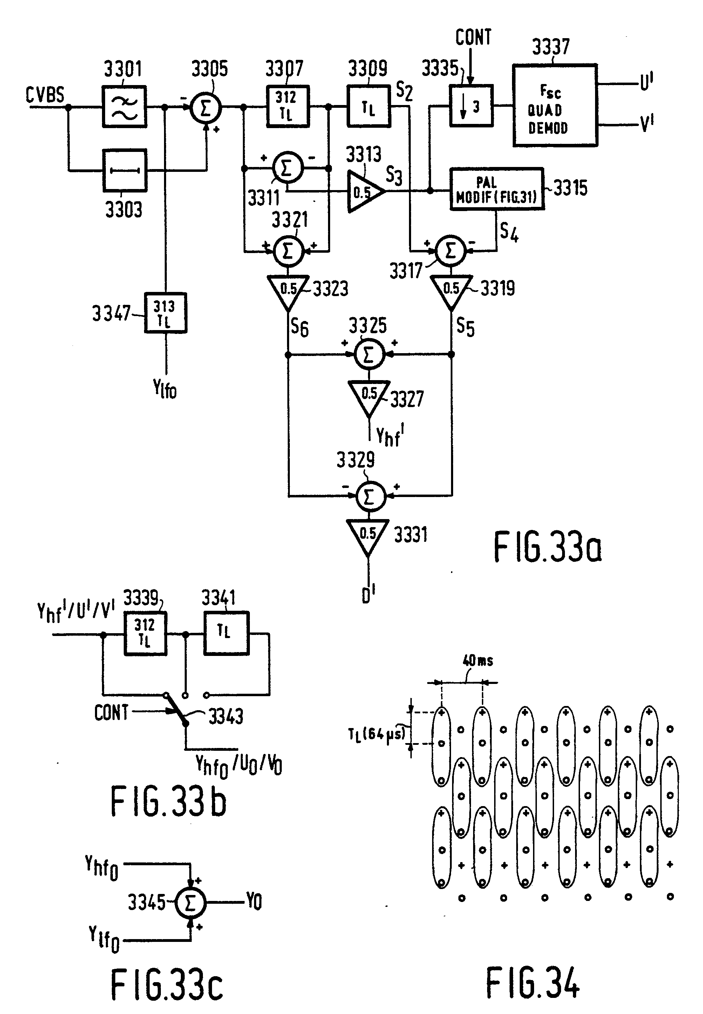

Fig. 33 shows an extended decoder corresponding to the extended encoder of Fig. 32. In Fig. 33a, the transmitted video signal CVBS is applied to a band splitter filter comprising a low-pass filter 3301 for obtaining a low-frequency luminance signal Ylf0, a compensating delay 3303, and a subtractor 3305 for subtracting output signals of the filter 3301 and the delay 3303 to obtain a high-frequency portion of the input video signal. This high frequency portion is applied to a series arrangement of a field delay 3307 and a line delay 3309 which supplies the signal $S_2$ (formula 45). The input and the output signals of the field memory 3307 are subtracted by a subtractor 3311. The subtractor output signal is applied to a halving circuit 3313 which supplies the signal $S_3$ (formula 46). Subsequently, the signal $S_3$ is processed by a PAL-modifier 3315 (see Fig. 31) to obtain the signal $S_4$ (formula 47). The signal $S_5$ (formula 48) is obtained by subtracting $S_4$ from $S_2$ in subtractor 3317, and by halving the subtractor output signal in halving circuit 3319. The signal $S_6$ is obtained by adding (adder 3321) and halving (halving circuit 3323) the input and output signals of the field memory 3307, see formula 49. Subsequently, the signal $Yhf'$ is obtained by averaging $S_5$ and $S_6$ by using an adder 3325 and a halving circuit 3327, see formula 50. The signal $D'(t)$ is obtained in accordance with formula 51 by subtracting $S_6$ from $S_5$ and halving the result (subtractor 3229; halving circuit 3331).

The chrominance signals $U'$ and $V'$ are obtained by decreasing the sample rate of the signal $S_3$ by three (circuit 3335) and demodulating the output signal of the circuit 3335 by the demodulator 3337.

The signals $Yhf'/U'/V'$ are yet to be processed by the interpolator shown in Fig. 33b, which comprises a series arrangement of a field memory 3339 and a line memory 3341, and a switch 3343 selecting the input signal of the field memory 3339, the input signal of the line memory 3341 or the output signal of the line memory 3341. The output of the switch 3343 supplies decoded chrominance output signals UO and VO and a decoded high-frequency luminance signal Yhf0.

In Fig. 33c, the signal Yhf0 is added by an adder 3345 to the low-frequency luminance signal Ylf0 which is received from a compensating field delay 3347 shown in Fig. 33a, to obtain an output luminance signal Y0.

The method described with reference to Fig. 30 and the above-described variant have the drawback that, inter alia, also filtering in the temporal direction is necessary so as to obtain identical Yhf/U/V information at the three positions in the vertical-temporal domain, which may cause blurs in the case of motion.

The following second variant of data reduction factor 3 only takes place in the vertical domain and will thus not cause any motion artefacts, but it does result in a limitation of the vertical resolution, which is, however, less serious.

The three lines to be considered, where the same Yhf/U/V/D information is present at a certain horizontal position, are constituted by the instants t0, t0 + TI and t0 + 2TI. These blocks of three lines are preferably given a configuration in the vertical-temporal domain as is shown in Fig. 34.

The mathematics are largely identical to those of the first variant, but they will hereinafter be described to exclude misunderstanding.

If Yhf, U and V are processed in such a way that this information is identical to the 3 considered time moments, we find with the aid of the expression of the PAL subcarrier frequency and the periodicity of the V-switch:

$$S_2(t) = Yhf(t) + D(t) + U(t)SIN(2.PI.Fsc.t) + V(t)SW(t)COS(2.PI.Fsc.t) \qquad (43)$$

$$S_2(t+TI) = Yhf(t) + D(t+TI) -U(t)COS(2.PI.Fsc.t+e) -V(t)SW(t)SIN(2.PI.Fsc.t+e) \qquad (44)$$

$$S_2(t+2TI) = Yhf(t) + D(t+2TI) -U(t)COS(2.PI.Fsc.t+e/2)-V(t)SW(t)COS(2.PI.Fsc.t+e/2) \qquad (45')$$

in which e = 2.PI/625. This (small) phase error can be completely eliminated by giving the PAL subcarrier at the encoder end line alternating small phase jumps in the correct order (this can be easily implemented by means of delays); the following description is based thereon. This of course has the result that the standard decoder will now become a little more sensitive to phase errors.

If we assume that $D(t) = D(t+2TI) = -D(t+TI)$, we can easily find that

$$S_3(t) = [S_2(t)-S_2(t+2TI)]/2 = = U(t)SIN(2.PI.Fsc.t) + V(t)SW(t)COS(2.PI.Fsc.t) \qquad (46')$$

from which U and V can be perfectly regained by means of a standard PAL color demodulator. However, there is no PAL delay line which compensates phase errors in the generated chrominance subcarrier so that these will continue to give rise to color errors. This can be compensated again by means of the measure line technique. This problem does not exist for the standard decoder.

If subsequently $S_3$ is processed by the so-called PAL modifier as is shown in Fig. 31, we find:

$$S_4(t) = BP\{2.S_3(t).SIN(4.PI.Fsc.t + 2.PHI)\}$$
$$= U(t)COS(2.PI.Fsc.t + 2.PHI) + V(t)SW(t)SIN(2.PI.Fsc.t + 2.PHI) \qquad (47')$$

in which BP{} represents a bandpass filter around the PAL subcarrier frequency. Subsequently we find:

$$S_5(t) = S_2)t+TI) + S_4(t) = ~Yhf(t) - D(t) + 2.SIN(PHI).\{U(t)SIN(2.PI.Fsc.t.) + V(t)SW(t)COS(2.PI.Fsc.t)\} \qquad (48')$$

We can also find:

$$S_6(t) = S_2(t) + S_2(t+2TI) = = Yhf(t) + D(t) \qquad (49')$$

Subsequently Yhf can be separated from D by means of:

$$Yhf'(t) = [S_5(t)+S_6(t)]/2 = ~Yhf(t) \qquad (50)$$

$$D'(t) = [S_6(t)-S_5(t)]/2 = \qquad (51')$$
$$= D(t)-SIN(PHI).\{U(t)SIN(2.PI.Fsc.t)-V(t)SW(t)COS(2.PI.Fsc.t)\}$$

at which thus a crosstalk occurs from U/V to D, dependent on the phase error of the generated chrominance subcarrier. Dependent on the amplitude of D(t) this may be acceptable or just unacceptable. In the latter case the same measure line compensation can be used again.

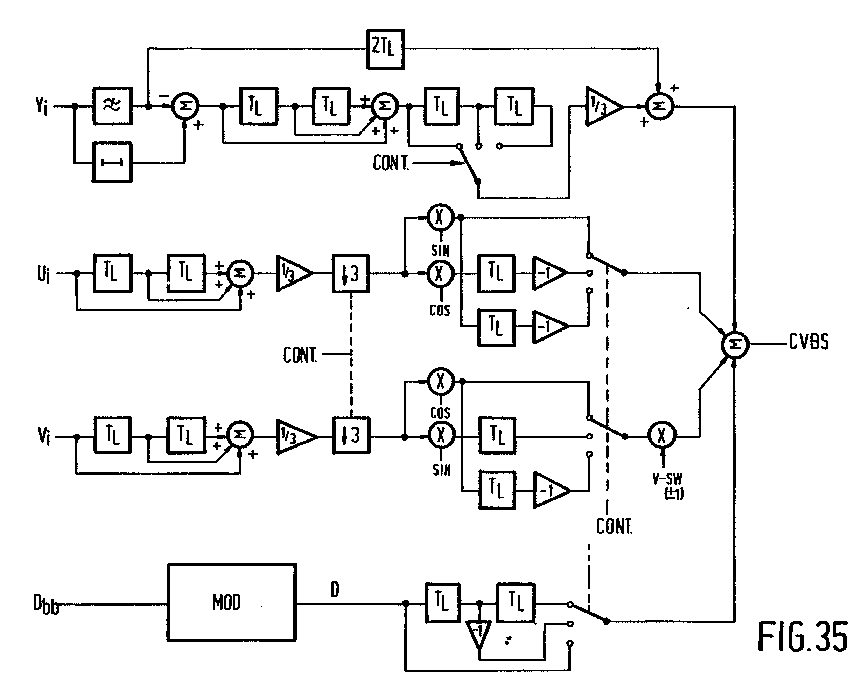

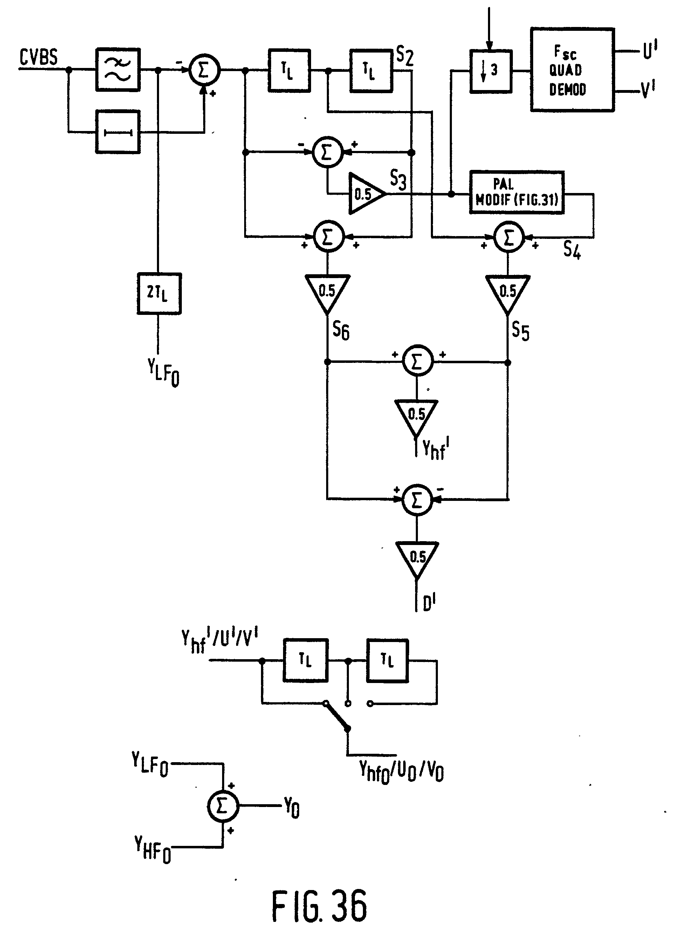

Figs. 35 and 36 show an embodiment of this second variant of data reduction factor 3. Since Figs. 35 and 36 resemble Figs. 32 and 33, respectively, to a very large extent, they will not be described in detail.

This technique can be summed up as follows. By making chrominance and high-frequency luminance identical groups of 3 lines which are located close together, room is created to transmit an additional signal which comprises identical information with reference to these three lines in a PAL signal while maintaining the compatibility. The advantage of this method is the additional possibility of perfectly separating color and brightness from each other.

Hereinbefore several different methods have been described with reference to Figs. 27-36 with which additional information could be transmitted in a compatible manner in the active video portion of a PAL signal. Use is made of an extra subcarrier which is located in the so-called Raven-Kremers hole. This hole is defined in the vertical-temporal spectrum so that there are degrees of freedom with respect to the position on the horizontal frequency axis. As stated, this subcarrier frequency must satisfy

$$Frk = (m + 1/2)Fl + 50\ dn + dft \qquad [Hz]$$

in which

- m and dn are integers with dimensions c/pw and c/ph, respectively
- $|dn| \ll 156$ c/ph
- $|dft| \ll 12.5$ Hz
- $Fl = 15625$ Hz (line frequency).

This carrier with its modulate causes different interference components in a standard receiver, namely
- crosstalk of the extra information at high-frequency luminance
- crosstalk of the extra information at chrominance
- crosstalk of the extra information at low-frequency luminance The first component is found to be the least disturbing, while the third component appears to be indirectly caused by the second component. Particularly the third component is very disturbing and it can be minimised by minimising the second component.

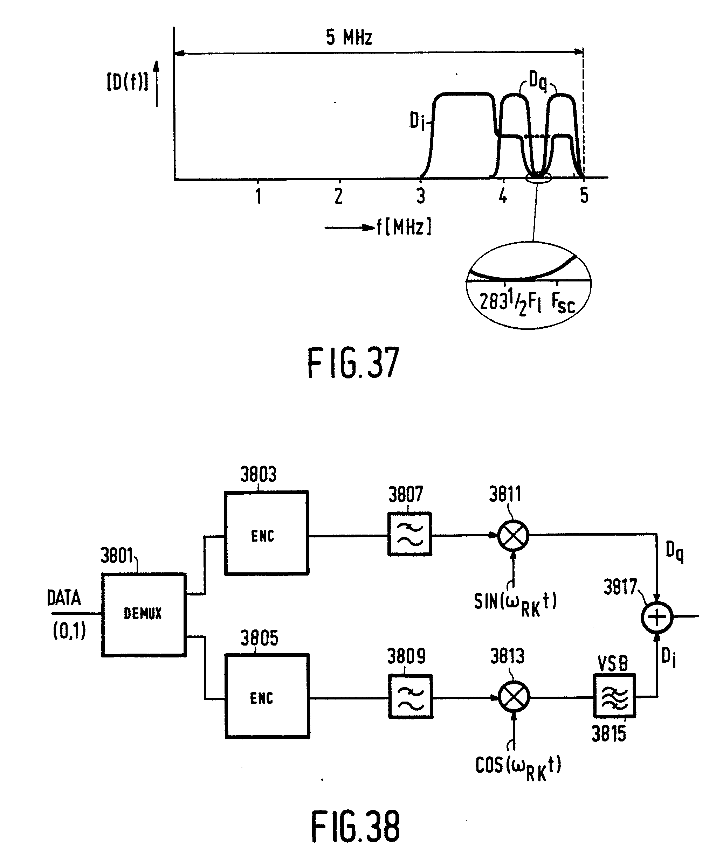

Assuming that mainly the low frequency (i.e. horizontal) cross components are most disturbing in the second component, it will have to be ensured that the extra modulate around the standard subcarrier has little or no power. Generally it is very difficult at an arbitrary position of the RK subcarrier in the horizontal spectrum to provide a zero in the spectrum of the baseband information of this extra modulate at a frequency which is equal to Fsc-Frk. However, in many cases this is possible if Fsc-Frk is substantially equal to zero, hence, for example Frk = 283.5*Fl. In this case extra information in the DC information of the baseband must be removed either by encoding (digital modulate) or by filtering (analog modulate). To use the available video spectrum as efficiently as possible with respect to this extra modulate, a combination of vestigial sideband modulation and quadrature modulation as indicated in Fig. 37 can be chosen.

Fig. 38 is a block diagram of a possible embodiment. Assuming that the additional information is digital, the data is first split by a demultiplexer 3801 into two currents with different bit rates whereafter the two bit currents are encoded and converted by encoders 3803 for the low bit rate signal and 3805 for the high bit rate signal into N level signals in such a way that the statistic power density spectra in the two branches no longer comprise any DC components. Subsequently these N level signals are passed through pulse shapers 3807, 3809 so as to further shape the spectrum whereafter the two signals are quadrature-modulated by modulators 3811, 3813 on a subcarrier at a frequency of 283.5*Fl. The modulate having the largest bandwidth is then maximally limited to the video bandwidth by a VSB filter 3815, as is shown in Fig. 37. Then the two modulates are added by an adder 3817 whereafter further operations can be performed as described above.

To sum up the above-described improvement, the compatibility of the second subchannel employing technique can be improved while maintaining an efficient utilisation of the bandwidth by means of a combination of vestigial sideband and quadrature modulation and such a spectrum shaping that an extra modulate placed around the PAL subcarrier frequency has little power.

From reading the present disclosure, other modifications will be apparent to persons skilled in the art. Such modifications may involve other features which are already known in the design, manufacture and use of such methods and apparatus and component parts thereof and which may be used instead of or in addition to features already described herein. Although Claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any Claim and whether or not it mitigates any or all of the same technical problems as does the present invention. The applicants hereby give notice that new Claims may be formulated to such features and/or combinations of such features during the prosecution of the present application or of any further application derived therefrom. It is especially to be understood that the cross-color/cross-luminance reduction technique, each of the subchannel employing techniques and each described improvement of any such techniques may constitute a separate invention to be protected by a separate divisional patent application. In the framework of a transmission system in which digitized additional information is distributed over a plurality of subchannels, each of these subchannels carries digitally encoded information. However, if these subchannels are considered separately from such a system, they may carry analog information as well. The above descriptions of these subchannels are to be understood to describe the analog modifications as well as the digital embodiments.

## EP 0 390 271 A1

**Claims**

1. A method of encoding an extended television signal in compatibility with conventional television signals, said extended television signal comprising conventional television signal components and at least two extra signals including at least a partial video signal component, said method comprising the steps of:
encoding said conventional television signal components;
digitizing said extra signals for obtaining digital signals;
distributing said digital signals over at least one sub-channel for obtaining distributed signals; and
combining the distributed digital signals and the encoded conventional television signal components to form said extended television signal.

2. A method as claimed in Claim 1, wherein the extra signals comprise chrominance signals, said digitizing step including digitizing said chrominance signals.

3. A method as claimed in Claim 1, wherein the extra signals comprise left and right side panels, said digitizing step including digitizing said left and right side panels.

4. A method as claimed in Claim 1, wherein said distributing step comprises:
receiving said digital signals;
receiving a significance information signal;
multiplexing said digital signals and said significance information signal to obtain multiplexed signals; and
if said at least one subchannel includes at least two subchannels, demultiplexing said multiplexed signals over said at least two subchannels to obtain said distributed signals, and if said at least one subchannel includes just one subchannel, supplying said multiplexed signals as said distributed signals.

5. A method as claimed in Claim 1, wherein said combining step comprises:
receiving a luminance signal, chrominance signals, and a distributed signal;
separating said luminance signal into a low-frequency luminance signal and a high-frequency luminance signal;
time-variant filtering said high-frequency luminance signal;
time-variant filtering and modulating said chrominance signals;
time-variant filtering and modulating said distributed signal; and
combining said low frequency luminance signal, said filtered high-frequency luminance signal, said filtered and modulated chrominance signals and said filtered and modulated distributed signal, to form said extended television signal.

6. A method as claimed in Claim 5, wherein said chrominance time-variant filtering and modulating step comprises:
decimating said chrominance signals;
modulating each of said decimated chrominance signals in a first and a second phase;
interpolating a first chrominance signal by selecting a first phase signal or a delayed second phase signal;
interpolating a second chrominance signal by selecting a second phase signal or a delayed first phase signal; and
combining said interpolated chrominance signals to form said modulated chrominance signal.

7. A method as claimed in Claim 5 or 6, wherein said time-variant filtering steps comprise supplying a same or inverted time-variant filtered signal at more than two time instants, thereby allowing for both a color artifacts free display and an incorporation of said extra signals.

8. A method as claimed in Claim 5, 6 or 7, wherein said distributed signal and said chrominance signals are modulated onto a same subcarrier.

9. A circuit for decoding an encoded extended television signal compatible with a conventional television signal comprising analog encoded conventional television signal components and at least two extra signals including at least a partial video signal component, said decoding circuit comprising:
means for receiving an extended video signal;
means coupled to said receiving means for separating said extended video signal into a low-frequency luminance signal and a high-frequency video signal;
means coupled to said separating means for obtaining a high-frequency luminance signal from said high-frequency video signal;
means coupled to said separating means for obtaining chrominance signals from said high-frequency video signal; and
means coupled to said separating means for obtaining said extra signals from said high-frequency video signal.

10. A decoding circuit as claimed in Claim 9, wherein said high-frequency luminance obtaining means and said chrominance obtaining means comrise a time-variant filter.

30

11. A decoding circuit as claimed in Claim 9 or 10, wherein said chrominance obtaining means and said extra signal obtaining means comprise a common demodulator.

12. A decoding circuit as claimed in Claim 11, wherein said demodulator comprises means coupled to receive said high-frequency video signal for supplying a memory difference signal to a first phase demodulator and a second phase demodulator, said extra signal being obtained by adding output signals of said first and second phase demodulators, respectively, a further signal being obtained by subtracting said output signals, said demodulator further comprising means coupled to receive said high-frequency video signal for supplying a memory sum signal to a further demodulator, and means for obtaining first and second chrominance signals by adding and subtracting, respectively, said further signal and an output signal of said further demodulator.

13. A decoding circuit as claimed in Claim 12, wherein said memory difference means and said memory sum means comprise a common line or field memory, a subtractor coupled to an input and an output of said memory for supplying said memory difference signal, and an adder coupled to said input and said output of said memory for supplying said memory sum signal.

14. A decoding circuit as claimed in Claim 9, wherein said means for obtaining said extra signals include means for obtaining digitized chrominance signals.

15. A decoding circuit as claimed in Claim 9, wherein said means for obtaining said extra signals include means for obtaining digitized left and right side panels.

16. A device for displaying wide-image television signals encoded in accordance with a MAC television system, further comprising a decoding circuit as claimed in Claim 9.

FIG.1

EP 0 390 271 A1

FIG.2

FIG.3a

FIG.3b

FIG.3c

FIG.4

FIG.5

FIG.6a

FIG.6b

FIG.7

FIG.8

FIG.9

FIG.10

FIG.11a

FIG.11b

FIG.12a

FIG.12b

FIG.13

FIG.14a

FIG.14b

FIG.15

FIG.16

FIG.17

FS

AL

SS

W/$\overline{R}$

FF

## FIG.18

## FIG.19

FIG. 20

FIG. 21

FIG.22

FIG.23

FIG.24

FIG.25

FIG.26

# FIG.27

# FIG.28a

FIG. 28b

**FIG.29a**

16 - XXIII - PHN 12893 C

FIG.29b

EP 0 390 271 A1

17-XXIII- PHN 12893 C

$\frac{2}{625}$ ph

40 ms

# FIG. 30

SIN(2$\omega_{sc}$t)

$f_{SC}$

# FIG. 31

FIG.32

FIG.33a

FIG.33b

FIG.33c

FIG.34

FIG.35

FIG. 36

FIG.37

FIG.38

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PROCEEDINGS OF THE NATIONAL COMMUNICATIONS FORUM, vol. 42, no. 2, 30th September 1988, pages 1685-1690, Chicago, Illinois, US; A.G. TOTH et al.: "Hierarchical HDTV transmission, A total system approach for North America"<br>* Page 1688, left-hand column, lines 40-62; page 1688, right-hand column, lines 14-67 * | 1,3 | H 04 N    7/00<br>H 04 N   11/00 |
| A | PATENT ABSTRACTS OF JAPAN, vol. 12, no. 357 (E-662)[3204], 26th September 1988; & JP-A-63 114 391 (HITACHI LTD) 19-05-1988 | 1 | |
| A | EP-A-0 284 266  (B.B.C.)<br>* Page 2, left-hand column, lines 3-9 * | 1 | |
| A | INTERNATIONAL BROADCASTING CONVENTION , Brighton, 21st - 25th September 1984, pages 94-102; M.D. WINDRAM et al.: "Extended definition television - the MAC approach"<br>* Page 95, left-hand column, lines 2-17 * | 1 | TECHNICAL FIELDS SEARCHED (Int. Cl.5)<br><br>H 04 N |
| A | IEEE TRANSACTIONS ON BROADCASTING, vol. 34, no. 3, September 1988, pages 313-323, IEEE, New York, US; G.W. MEEKER et al.: "High definition and high frame rate compatible N.T.S.C. broadcasting television system"<br>* Page 319, right-hand columnm lines 3-10 * | 1 | |

The present search report has been drawn up for all claims

| Place of search | Date of completion of the search | Examiner |
|---|---|---|
| THE HAGUE | 02-07-1990 | YVONNET J.W. |

EPO FORM 1503 03.82 (P0401))